# FASCICULE DE BREVET EUROPEEN

(11) **EP 3 712 794 B1**
(45) Date de publication et mention de la délivrance du brevet: **11.08.2021**
(21) Numéro de dépôt: 20163912.7
(22) Date de dépôt: 18.03.2020
(51) Int. Cl.: G06F 21/54

(54) **PROCÉDÉ D'EXÉCUTION D'UN CODE BINAIRE D'UNE FONCTION SÉCURISÉE PAR UN MICROPROCESSEUR**
VERFAHREN ZUR AUSFÜHRUNG EINES BINÄRCODES VON EINEM MIKROPROZESSOR GESICHERTEN FUNKTION
METHOD FOR EXECUTING A BINARY CODE OF A FUNCTION SECURED BY A MICROPROCESSOR

(30) Priorité: 21.03.2019 FR 1902951
(43) Date de publication de la demande: 23.09.2020
(73) Titulaire: Commissariat à l'énergie atomique et aux énergies alternatives, 75015 Paris (FR)
(72) Inventeur: SAVRY, Olivier, 38054 Grenoble cedex 9 (FR)
(74) Mandataire: INNOV-GROUP

(56) Documents cités:
- EP-A1- 3 457 620
- EP-A2- 1 536 308
- WERNER MARIO ET AL: "Protecting the Control Flow of Embedded Processors against Fault Attacks", 10 mars 2016 (2016-03-10), INTERNATIONAL CONFERENCE ON FINANCIAL CRYPTOGRAPHY AND DATA SECURITY; [LECTURE NOTES IN COMPUTER SCIENCE; LECT.NOTES COMPUTER], SPRINGER, BERLIN, HEIDELBERG, PAGE(S) 161 - 176, XP047345561, ISBN: 978-3-642-17318-9 [extrait le 2016-03-10] * le document en entier *

## Description

L'invention concerne un procédé d'exécution d'un code binaire d'une fonction sécurisée par un microprocesseur. L'invention concerne également :
- un code binaire d'une fonction sécurisée, un support d'enregistrement d'informations et un microprocesseur pour la mise en œuvre de ce procédé d'exécution, et
- un compilateur pour générer ce code binaire.

Pour obtenir des informations sur un code binaire ou provoquer un fonctionnement inattendu du code binaire, de nombreuses attaques sont possibles. Par exemple, des attaques connues sous le terme d'« injection de fautes » ou « fault attack » en anglais peuvent être mises en œuvre. Ces attaques consistent à perturber le fonctionnement du microprocesseur ou de la mémoire contenant le code binaire, par divers moyens physiques comme des modifications des tensions d'alimentation, des modifications du signal d'horloge, l'exposition du microprocesseur à des ondes électromagnétiques et autres.

À l'aide de telles attaques, un attaquant peut altérer l'intégrité des instructions machines ou des données pour, par exemple, retrouver une clé secrète d'un système cryptographique, contourner des mécanismes de sécurité tels que la vérification d'un code PIN lors d'une authentification ou simplement empêcher l'exécution d'une fonction essentielle pour la sécurité d'un système critique.

Ces attaques peuvent provoquer notamment trois types de fautes, dites fautes d'exécution, lors de l'exécution du code binaire :
1) une altération des instructions du code machine exécuté,
2) une altération des données stockées dans la mémoire principale ou dans des registres du microprocesseur, et
3) une altération du flot de contrôle du code machine.

Le flot de contrôle correspond au chemin d'exécution suivi lors de l'exécution du code machine. Le flot de contrôle est classiquement représenté sous la forme d'un graphe connu sous le terme de graphe de flot de contrôle ou « control flow graph » en anglais.

Le code binaire d'une fonction peut être instrumenté pour permettre la détection et le signalement des fautes d'exécution. Lorsque le code binaire d'une fonction est ainsi instrumenté, ce code binaire est qualifié de « code binaire d'une fonction sécurisée ». En effet, contrairement au code binaire d'une fonction non-sécurisée, ce code binaire est apte à permettre le signalement de fautes d'exécution typiquement rencontrées en cas d'attaques.

A ce sujet, de l'état de la technique est connu de :
- EP3457620A1,
- Werner Mario et AL : "Protecting the Control Flow of Embedded Processors against Fault Attacks", 10/03/2016, International Conférence on Financial Cryptography and Data security, pages 161-178,
- WO2012/010205A1, et
- US2017214523A1.

Cet état de la technique décrit des solutions pour sécuriser le code binaire contre des attaques qui provoquent un détournement du flot d'exécution.

Les solutions connues fonctionnent correctement dans le cas d'un code binaire statique, c'est-à-dire d'un code binaire comportant uniquement des instructions de branchement direct. En effet, dans ce cas, on connaît, au moment de la génération du code binaire, le ou les fonctions qui seront appelées et donc la façon de les déchiffrées.

Toutefois, il existe aussi des codes binaires dynamiques, c'est-à-dire des codes binaires comportant des instructions de branchement indirect utilisées, par exemple, pour déclencher l'exécution d'une fonction externe sécurisée. A titre d'illustration, la fonction externe sécurisée peut être une fonction d'une bibliothèque pré-enregistrée de fonctions sécurisées. L'emplacement où est enregistrée une telle bibliothèque n'est pas connue au moment de la génération du code binaire dynamique. Dans ce cas, il faut donc nécessairement utiliser des instructions de branchement indirect pour appeler les fonctions de la bibliothèque au moment de l'exécution du code binaire. En effet, l'instruction de branchement indirect permet d'obtenir l'adresse de branchement à partir du contenu d'un registre de destination du microprocesseur.

Le contenu du registre de destination n'est pas connu au moment de la compilation du code binaire dynamique. De plus, le code binaire de la fonction externe sécurisée a généralement été compilé indépendamment du code binaire dynamique. Les vecteurs d'initialisations nécessaires aux déchiffrements des blocs de base de la fonction externe sécurisée ne sont donc pas non plus connus au moment de la compilation du code binaire dynamique.

Ainsi, les solutions proposées dans WO2012/010205A1 et US2017214523A1 ne peuvent pas être appliquées à de tels codes binaires dynamiques.

L'objectif ici est de proposer un procédé d'exécution d'un code binaire d'une fonction sécurisée qui offre au moins simultanément les deux possibilités suivantes :
- fonctionner avec des codes binaires dynamiques, et
- sécuriser le code binaire contre les attaques qui provoquent un détournement du flot d'exécution.

L'invention a donc pour objet un procédé d'exécution d'un code binaire d'une fonction sécurisée par un microprocesseur conforme à la revendication 1.

L'invention a également pour objet un code binaire d'une fonction sécurisée exécutable par un microprocesseur pour la mise en œuvre du procédé d'exécution revendiqué.

L'invention a également pour objet un support d'enregistrement d'informations lisible par un microprocesseur, ce support d'enregistrement d'informations contenant le code binaire revendiqué.

L'invention a également pour objet un microprocesseur pour la mise en œuvre du procédé d'exécution revendiqué, ce microprocesseur comportant une unité arithmétique et logique et un module matériel de sécurisation, dans lequel le module matériel de sécurisation est configuré pour construire le vecteur d'initialisation à partir du contenu de la ligne de donnée associée à l'adresse obtenue à partir du contenu du registre de destination.

Enfin, l'invention a également pour objet un compilateur apte à transformer automatiquement un code source d'une fonction sécurisée en un code binaire tel que revendiqué.

L'invention sera mieux comprise à la lecture de la description qui va suivre, donnée uniquement à titre d'exemple non limitatif et faite en se référant aux dessins sur lesquels :
- la figure 1 est une illustration schématique de l'architecture d'un appareil électronique apte à exécuter un code binaire d'une fonction sécurisée ;
- la figure 2 est une illustration schématique de la structure d'une ligne d'instruction codant une instruction du code binaire exécuté par l'appareil de la figure 1,
- les figures 3 à 5 sont des illustrations schématiques de différentes portions du code binaire de la fonction sécurisée susceptible d'être exécutée par l'appareil de la figure 1;
- la figure 6 est une illustration schématique de différents registres de l'appareil électronique, utilisés lors de l'exécution de la fonction sécurisée,
- la figure 7 est un organigramme d'un procédé d'exécution du code binaire de la fonction sécurisée ;
- la figure 8 est une illustration schématique de la structure d'une ligne de donnée du code binaire exécuté par l'appareil de la figure 1,
- la figure 9 est un organigramme d'un détail d'une étape du procédé de la figure 7 mise en œuvre pour sécuriser les données enregistrées dans une pile d'exécution de l'appareil de la figure 1;
- la figure 10 est illustrations schématiques de différentes portions du code binaire de la fonction sécurisée susceptible d'être exécutée par l'appareil de la figure 1 ;
- la figure 11 est un organigramme d'un détail d'une étape du procédé de la figure 6 mise en œuvre pour rendre plus difficile les attaques par dépassement de tampon,
- la figure 12 est une illustration schématique d'une pile d'exécution de l'appareil de la figure 1,
- la figure 13 est une illustration schématique d'un compilateur apte à générer le code binaire exécuté par l'appareil de la figure 1.

### Chapitre I : Conventions, notations et définitions :

Dans les figures, les mêmes références sont utilisées pour désigner les mêmes éléments. Dans la suite de cette description, les caractéristiques et fonctions bien connues de l'homme du métier ne sont pas décrites en détails.

Dans cette description, les définitions suivantes sont adoptées.

Un « programme » désigne un ensemble d'une ou de plusieurs fonctions prédéterminées que l'on souhaite faire exécuter par un microprocesseur.

Un « code source » est une représentation du programme dans un langage informatique, n'étant pas directement exécutable par un microprocesseur et étant destiné à être transformé par un compilateur en un code machine directement exécutable par le microprocesseur.

Un programme ou un code est dit être « directement exécutable » lorsqu'il est apte à être exécuté par un microprocesseur sans que ce microprocesseur n'ait besoin au préalable de le compiler au moyen d'un compilateur ou de l'interpréter au moyen d'un interpréteur.

Une « instruction » désigne une instruction machine exécutable par un microprocesseur. Une telle instruction est constituée :
- d'un opcode, ou code d'opération, codant la nature de l'opération à exécuter, et
- d'un ou plusieurs opérandes définissant la ou les valeurs des paramètres de cette opération.

Un « code machine » est un ensemble d'instructions machines. Il s'agit typiquement d'un fichier contenant une succession de bits portant la valeur « 0 » ou « 1 », ces bits codant les instructions à exécuter par le microprocesseur. Le code machine est directement exécutable par le microprocesseur, c'est-à-dire sans nécessiter une compilation ou une interprétation préalable.

Un « code binaire » est un fichier contenant une succession de bits portant la valeur « 0 » ou « 1 ». Ces bits codent des données et des instructions à exécuter par le microprocesseur. Ainsi, le code binaire comprend au moins un code machine et en plus, généralement, des données numériques traitées par ce code machine.

Un « flot d'instructions » est une succession d'instructions classées les unes après les autres et qui forme, dans le code machine, une suite ordonnée de bits. Le flot d'instructions débute par une instruction initiale et se termine par une instruction finale. Par rapport à une instruction donnée du flot d'instructions, les instructions situées du côté de l'instruction initiale sont appelées « instructions précédentes » et les instructions situées du côté de l'instruction finale, sont appelées « instructions suivantes ». Dans ce texte, ce flot d'instructions en mémoire est découpé en une succession de blocs de base immédiatement consécutifs ou séparés par des blocs de données.

Dans ce texte, un « bloc de base » est un groupe d'instructions successives du flot d'instructions qui débute à une adresse de branchement et qui se termine par une seule instruction de branchement explicite ou implicite. Une instruction de branchement explicite se caractérise par la présence explicite d'un opcode dans le code machine qui code l'instruction de branchement. Une instruction de branchement implicite correspond au cas où l'exécution d'un bloc de base précédent se poursuit systématiquement par l'exécution d'un bloc de base suivant situé, dans le code machine, immédiatement après le bloc de base précédent. Dans ce cas, étant donné qu'en absence d'instruction de branchement explicite, les instructions du code machine sont exécutées dans l'ordre les unes après les autres, il n'est pas nécessaire d'introduire à la fin du bloc de base précédent une instruction de branchement explicite vers le bloc de base suivant. Dans cette description, on dit que dans ce cas, le bloc de base précédent se termine par une instruction de branchement implicite car elle n'est pas explicitement codée dans le code machine. Dans ce cas, le bloc de base précédent se termine juste avant l'adresse de branchement du bloc de base suivant. Dans cette demande, l'expression « instruction de branchement » désigne une instruction de branchement explicite à défaut de mention contraire. Ainsi, l'exécution d'un bloc de base débute systématiquement par l'exécution de sa première instruction et se termine systématiquement par l'exécution de l'instruction de branchement qui termine ce bloc de base. Un bloc de base ne comporte pas d'autres instructions de branchement que celle située à la fin de ce bloc de base. Ainsi, les instructions d'un bloc de base sont systématiquement toutes lues par le microprocesseur les unes après les autres dans l'ordre où elles sont présentes dans ce bloc de base. L'instruction de branchement peut diriger, lorsqu'elle est exécutée, le flot de contrôle systématiquement vers la même adresse de branchement ou, en alternance, vers différentes adresses de branchement. Ce dernier cas de figure se rencontre, par exemple, lorsqu'à la fin du bloc de base exécuté, le flot de contrôle peut se poursuivre vers un premier et, en alternance, vers un deuxième bloc de base.

Une « instruction de branchement» est une instruction qui, lorsqu'elle est exécutée par le microprocesseur, déclenche un saut vers l'adresse de branchement d'un autre bloc de base. Typiquement, à cet effet, cette instruction remplace la valeur actuelle du compteur ordinal par la valeur de l'adresse de branchement. On rappelle que le compteur ordinal contient l'adresse de la prochaine instruction à exécuter par le microprocesseur. En absence d'instruction de branchement, à chaque fois qu'une instruction est exécutée, le compteur ordinal est incrémenté de la taille de l'instruction actuellement exécutée. En absence d'instruction de branchement, les instructions sont systématiquement exécutées séquentiellement les unes après les autres dans l'ordre où elles sont enregistrées dans une mémoire principale. L'instruction de branchement peut être inconditionnelle, c'est à dire que le saut vers l'adresse de branchement est systématiquement réalisé dès que cette instruction est exécutée. Une instruction de branchement inconditionnel est par exemple l'instruction « JAL » dans le jeu d'instructions "RISC V". L'instruction de branchement peut aussi être conditionnelle, c'est-à-dire que le saut vers l'adresse de branchement est déclenché lors de son exécution uniquement si une condition particulière est vérifiée. Par exemple, une instruction de branchement conditionnel est une instruction « BRANCH » dans le jeu d'instructions "RISC-V" . L'instruction de branchement peut aussi bien être un appel à une fonction. Dans ce texte, à défaut d'indication contraire, le terme « instruction de branchement » désigne aussi bien les instructions de branchement direct qu'indirect. Une instruction de branchement direct est une instruction de branchement qui contient directement la valeur numérique de l'adresse de branchement. Une instruction de branchement indirect, est une instruction de branchement vers une adresse de branchement contenue dans une mémoire ou un registre du microprocesseur. Ainsi, contrairement à une instruction de branchement direct, une instruction de branchement indirect ne contient pas directement la valeur numérique de l'adresse de branchement. Par exemple, une instruction de branchement indirect est l'instruction "JALR" du jeu d'instructions RISC-V.

Une « adresse de branchement » est l'adresse dans la mémoire principale à laquelle se trouve la première ligne d'instruction d'un bloc de base. Par la suite, on parle d'adresse de branchement même pour les blocs de base dont la première instruction est exécutée suite à l'exécution d'une instruction de branchement implicite.

On parle d'exécution d'une fonction pour désigner l'exécution des instructions réalisant cette fonction.

Dans un souci de simplification, dans cette description et dans les figures, les instructions ne sont pas représentées sous forme binaire, mais plutôt sous une forme symbolique exprimée dans un langage évolué de plus haut niveau.

### Chapitre II : Architecture de l'appareil :

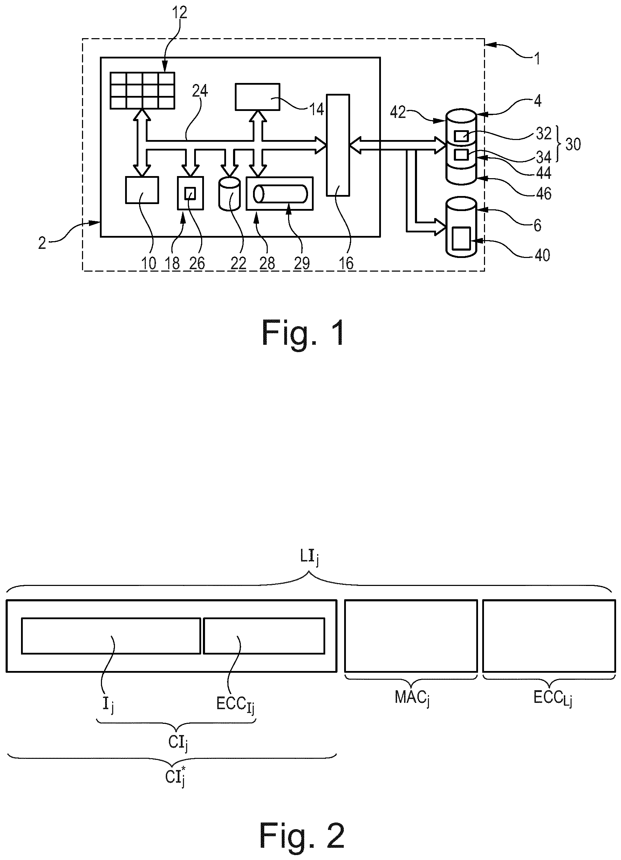

La figure 1 représente un appareil électronique 1 comportant un microprocesseur 2, une mémoire principale 4 et un support 6 de stockage de masse. Par exemple, l'appareil 1 est un ordinateur, un smartphone, une tablette électronique ou similaire.

Le microprocesseur 2 comporte ici :
- une unité arithmétique et logique 10 ;
- un ensemble 12 de registres ;
- un module de commande 14 ;
- une interface 16 d'entrée/sortie de données,
- un chargeur 18 d'instructions comportant un compteur ordinal 26,
- une file 22 d'instructions à exécuter, et
- un module matériel 28 de sécurisation.

La mémoire 4 est configurée pour stocker des instructions et des données d'un code binaire 30 d'un programme devant être exécuté par le microprocesseur 2. La mémoire 4 est une mémoire à accès aléatoire. Typiquement, la mémoire 4 est une mémoire volatile. La mémoire 4 peut être une mémoire externe au microprocesseur 2 comme représenté sur la figure 1. Dans ce cas, la mémoire 4 est réalisée sur un substrat mécaniquement séparé du substrat sur lequel sont réalisés les différents éléments du microprocesseur 2 comme l'unité 10.

Ici, la mémoire 4 est divisée en mots-machines successifs de longueur fixe. Chaque mot-machine peut être transféré en un seul cycle d'horloge depuis la mémoire 4 jusque dans un registre du microprocesseur. A cet effet, la taille N_{MM} d'un mot-machine est égale au nombre maximum de bits qui peuvent être transférés simultanément de la mémoire 4 vers un registre de l'ensemble 12. Ici, la taille N_{MM} est strictement supérieure Nᵢₙₛₜ bits, où Nᵢₙₛₜ bits est le nombre de bits des instructions du jeu d'instructions du microprocesseur 2. Typiquement, Nᵢₙₛₜ est un entier supérieure ou égale à 8, 16, 32 ou 64. Dans cet exemple, Nᵢₙₛₜ est égal à 32 et la taille N_{MM} est égale à 128 bits.

Classiquement, la mémoire 4 est principalement divisées en trois partie :
- une première partie 42 contenant les instructions à exécuter,
- une deuxième partie 44 contenant les données à traiter, et
- une troisième partie 46 utilisée pour sauvegarder le contexte d'exécution d'une fonction lorsqu'elle appelle une autre fonction.

La partie 46 est connue sous le terme de "pile d'exécution" ou "call stack" en anglais. Par conséquent, par la suite la partie 46 est également appelée "pile 46".

Le code binaire 30 comporte notamment un code machine 32 d'une fonction sécurisée et un bloc 34 de données nécessaires à l'exécution du code binaire 30. Le code machine 32 et le bloc 34 sont enregistrés dans, respectivement, les parties 42 et 44.

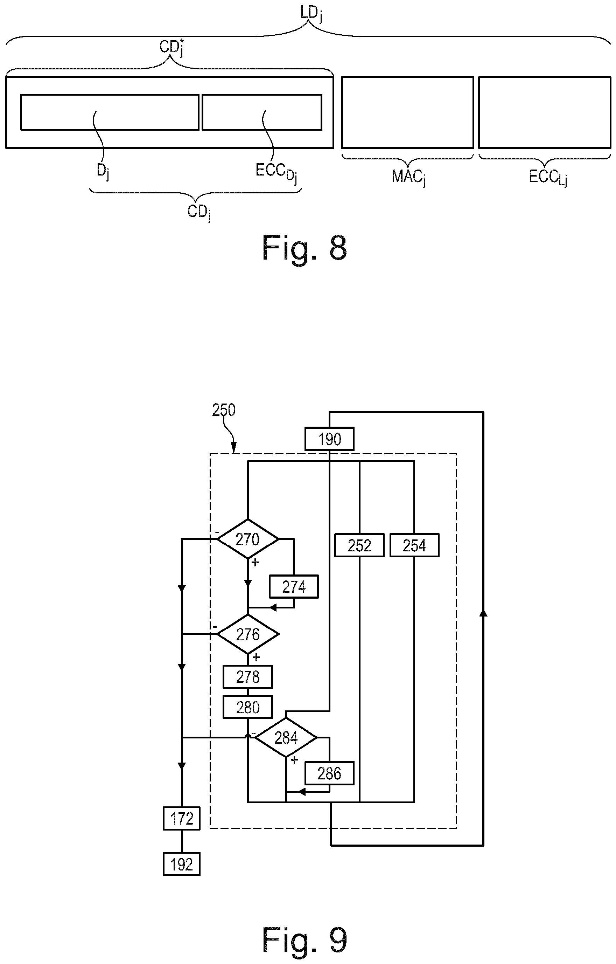

Chaque fonction sécurisée correspond à un ensemble de plusieurs lignes de code, par exemple plusieurs centaines ou milliers de lignes de code, enregistrées à des adresses successives dans la mémoire 4. Ici, chaque ligne de code correspond à un mot-machine. Ainsi, une ligne de code est chargée dans un registre du microprocesseur 2 en une seule opération de lecture. De même, une ligne de code est écrite dans la mémoire 4 par le microprocesseur 2 en une seule opération d'écriture. Chaque ligne de code correspond à une seule instruction ou à une seule donnée. Par la suite, lorsque la ligne de code contient une instruction, elle est appelée "ligne d'instruction". Lorsque la ligne de code contient une donnée, elle est appelée "ligne de donnée". Les structures d'une ligne d'instruction et d'une ligne de donnée sont décrites en détail en référence aux figures 2 et 8.

Le bloc 34 est typiquement situé dans une plage d'adresses prédéterminée au début du code binaire 30. Ainsi, l'exécution du code binaire 30 débute par le chargement et le traitement des données du bloc 34. Ici, le bloc 34 comporte notamment :
- un cryptogramme ka* obtenu en chiffrant une clé ka à l'aide d'une clé publique pk_{CPU} du microprocesseur 2, et
- des cryptogramme iv_{msbi}*, iv_{ctei}*, iv_{lsbi}*, iv_{msbd}*, iv_{cted}*, ivₚᵢₗₑ*, iv_{ctep}*, chiffrés à l'aide de la clé publique pk_{CPU}, de différentes valeurs destinées à initialiser le contenu de différents registres du microprocesseur 2 afin de permettre le déchiffrement du code binaire 30.

A titre d'illustration, le microprocesseur 2 est conforme à l'architecture RISC (« Reduced Instructions Set Computer ») et il met en œuvre le jeu d'instructions "RISC-V".

Ici, l'unité 10 est une unité arithmétique et logique de Nᵢₙₛₜ bits.

Le chargeur 18 charge dans la file 22 la prochaine instruction à exécuter par l'unité 10 à partir de la partie 42 de la mémoire 4. Plus précisément, le chargeur 18 charge l'instruction sur laquelle pointe le compteur ordinal 26.

L'unité 10 est notamment configurée pour exécuter les unes après les autres les instructions chargées dans la file 22. Les instructions chargées dans la file 22 sont généralement systématiquement exécutées dans l'ordre où ces instructions ont été enregistrées dans cette file 22. L'unité 10 est aussi capable d'enregistrer le résultat de ces instructions exécutées dans un ou plusieurs des registres de l'ensemble 12.

Dans cette description, on utilisera comme synonymes « exécution par le microprocesseur 2 » et « exécution par l'unité 10 ».

Le module 14 est configuré pour déplacer des données entre l'ensemble 12 de registres et l'interface 16. L'interface 16 est notamment apte à acquérir des données et des instructions, par exemple, depuis la mémoire 4 et/ou le support 6 extérieurs au microprocesseur 2.

Le module 28 est capable d'exécuter automatiquement les différentes opérations décrites en détails dans les chapitres suivants pour sécuriser l'exécution des fonctions sécurisées. Le module 28 fonctionne indépendamment et sans utiliser l'unité 10. Ainsi, il est capable de traiter les lignes de code avant et/ou après que celles-ci soient traitées par l'unité 10. A cet effet, il comporte notamment une mémoire non-volatile sécurisée 29. Aucun accès à cette mémoire 29 sans passer par l'intermédiaire du module 28 n'est prévu. Dans ce mode de réalisation, le module 28 est pré-programmé, par exemple lors de sa conception, pour exécuter des opérations telles que les opérations suivantes :
- vérifier l'intégrité et l'authenticité d'une donnée à partir d'un code d'authentification de message plus connu sous l'acronyme MAC (« Message Authentification Code »),
- construire un code d'authentification de message,
- chiffrer une donnée pour obtenir un cryptogramme,
- déchiffrer un cryptogramme pour obtenir une donnée en claire,
- exécuter une fonction préprogrammée Fᵢᵥ.

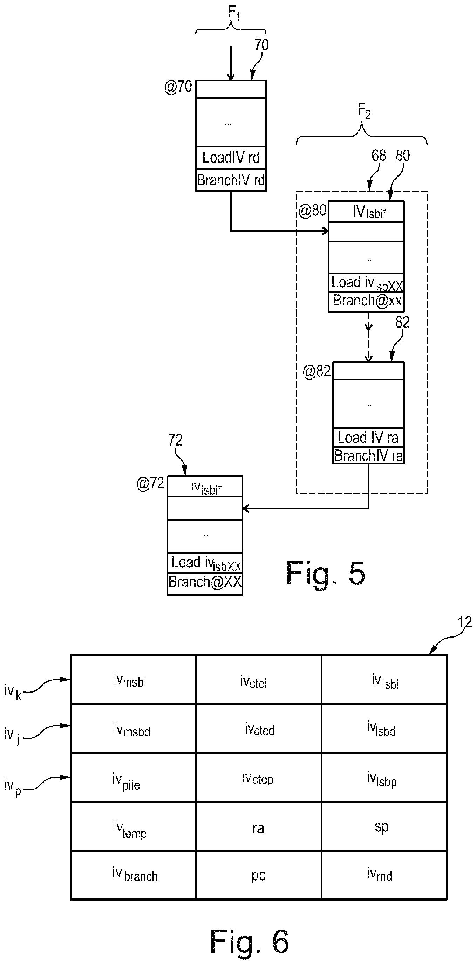

La mémoire 29 est utilisée pour stocker les informations secrètes nécessaires à la mise en œuvre du procédé de la figure 6. Ici, elle comporte donc notamment des informations secrètes pré-enregistrées avant le début de l'exécution du code binaire 30. En particulier, elle comporte les informations pré-enregistrées suivantes :
- une clé secrète k' utilisée pour la vérification des codes d'authentification de message,
- un clé privée secrète sk_{CPU} qui permet de déchiffrer les données qui ont été chiffrées à l'aide de la clé publique pk_{CPU}.

Dans cet exemple de réalisation, l'ensemble 12 comporte des registres généraux utilisables pour stocker tout type de données. La taille de chacun de ces registres est, par exemple, égale à N_{MM}.

Un bus d'échange de données 24 qui relie les différents composants du microprocesseur 2 entre eux est représenté sur la figure 1 pour indiquer que les différents composants du microprocesseur peuvent échanger des données entre eux.

Le support 6 est typiquement une mémoire non volatile. Par exemple, il s'agit d'une mémoire du type EEPROM ou Flash. Il contient ici une copie 40 de sauvegarde du code binaire 30. Typiquement, c'est cette copie 40 qui est automatiquement recopiée dans la mémoire 4 pour restaurer le code 30, par exemple, après une coupure de courant ou similaire ou juste avant que débute l'exécution du code 30.

### CHAPITRE III : SÉCURISATION DU CODE MACHINE :

Ici, la structure du code machine de la fonction sécurisée est décrite dans le cas particulier du code machine 32. Toutefois, ce qui est décrit dans ce cas particulier se transpose sans difficulté à tout code machine d'une fonction sécurisée.

Le code machine 32 comporte une succession de lignes d'instruction LIⱼ enregistrées les unes après les autres dans la mémoire 4. Par la suite, dans ce chapitre, l'indice j est utilisé pour identifier la ligne d'instruction LIⱼ parmi les autres lignes d'instruction du code machine 32. De plus, l'indice j est aussi utilisé comme un numéro d'ordre indiquant dans quel ordre les lignes Llⱼ sont classées. Ainsi, on note Llⱼ₊₁ la ligne d'instruction située immédiatement après la ligne Llⱼ. Chaque ligne d'instruction LIⱼ code une instruction du jeu d'instructions du microprocesseur 2 apte à être exécutée après avoir été déchiffrée et décodée par l'unité 10 de ce microprocesseur.

Les structures de toutes les lignes Llⱼ sont identiques. Cette structure est représentée en détail sur la figure 2 dans le cas particulier de la ligne Llⱼ.

La ligne Llⱼ comporte un cryptogramme Clⱼ*, un code MAC_{j,} et un code ECCLⱼ.

Le cryptogramme Clⱼ* est obtenu en chiffrant une concaténation Clⱼ à l'aide de la clé secrète ka et d'un vecteur d'initialisation ivₖ. Plus précisément, le cryptogramme Clⱼ* est obtenu à l'aide de la relation suivante : Clⱼ* = fₖₐ(Clⱼ ; ivₖ), où fₖₐ est une fonction de chiffrement correspondant à une fonction de déchiffrement fₖₐ⁻¹ préprogrammée dans le module 28. Typiquement, la fonction fₖₐ est une fonction de chiffrement symétrique. Dès lors, la clé ka permettant de déchiffrer le cryptogramme Clⱼ* est préenregistrée dans la mémoire 29 afin de permettre au module 28 de déchiffrer ce cryptogramme Clⱼ*. Le vecteur d'initialisation ivₖ est construit comme décrit plus loin dans ce chapitre.

La concaténation Clⱼ est ici la concaténation d'une instruction Iⱼ à exécuter par le microprocesseur 2 et d'un code ECCₗⱼ. Le code ECCₗⱼ permet de détecter une erreur dans l'instruction Iⱼ et, éventuellement, de corriger cette erreur. Par exemple, le code ECCₗⱼ peut être le code connu sous l'acronyme BCH (Bose, Ray-Chaudhuri, Hocquenghem) qui présente l'avantage d'être particulièrement facile à mettre en œuvre. Toutefois, tout autre code détecteur ou correcteur d'erreur connu peut être mis en œuvre. La taille du code ECCₗⱼ est supérieure ou égale à 1 ou 2 ou 3 bits et, généralement, inférieure à Nᵢₙₛₜ. La taille du code ECCₗⱼ est déterminée en fonction de la robustesse souhaitée. Plus on veut être capable de corriger un nombre de bits erronés important dans l'instruction Iⱼ, plus la taille du code ECCₗⱼ sera grande.

Le code MACⱼ est un code permettant de vérifier l'intégrité et l'authenticité du cryptogramme Clⱼ*. Ce code est communément appelé « code d'authentification de message » et connu sous l'acronyme MAC (« Message Authentification Code »). Un tel code MACⱼ est obtenu en construisant une étiquette à partir du cryptogramme Clⱼ* qui comporte normalement moins de bits que le cryptogramme Clⱼ*. Cette étiquette est construite à l'aide d'une fonction prédéterminée et de la clé secrète k' connue seulement de l'auteur du code binaire 30 et du microprocesseur 2. Ici, la clé k' est préenregistrée dans la mémoire 29. Par exemple, la fonction prédéterminée est une fonction de hachage. Dans ce cas, généralement, l'étiquette est le résultat de l'application de cette fonction de hachage à une combinaison, par exemple une concaténation, du cryptogramme Clⱼ* et de la clé k'.

À titre d'exemple, pour générer le cryptogramme Clⱼ* et le code MACⱼ, un algorithme de chiffrement authentifié est utilisé. Cet algorithme de chiffrement authentifié peut être choisi parmi les différents candidats à la compétition CAESAR (« Competition for Authentificated Encryption : Security, Applicability, and Robustness ») comme par exemple l'un des algorithmes désignés par les noms suivants : « ACORN », « ASCON », « SILC », « CLOC », « JAMBU », « KETJE ».

Le code ECC_{Lj} est un code correcteur d'erreur qui permet de détecter et de corriger une erreur dans le cryptogramme Clⱼ* et le code MACⱼ. Il est par exemple construit comme décrit dans le cas du code ECCₗⱼ.

Le cryptogramme Clₗⱼ* et les codes ECCₗⱼ, MACⱼ et ECC_{Lj} sont, typiquement, construits au moment où le code machine 32 est généré.

Par la suite, on note @ⱼ l'adresse dans la mémoire 4 à laquelle est enregistrée la ligne Llⱼ.

Le code machine 32 se compose d'une succession de blocs de base qui doivent être exécutés les uns après les autres. Ici, il existe un premier et un deuxième types de structures pour les blocs de base. Par la suite, les blocs de base qui présentent les structures du premier et du deuxième types sont appelés, respectivement, "bloc du premier type" et "bloc du deuxième type". Le premier type de structure est utilisé en cas de branchement direct. Le deuxième type de structure est utilisé en cas de branchement indirect.

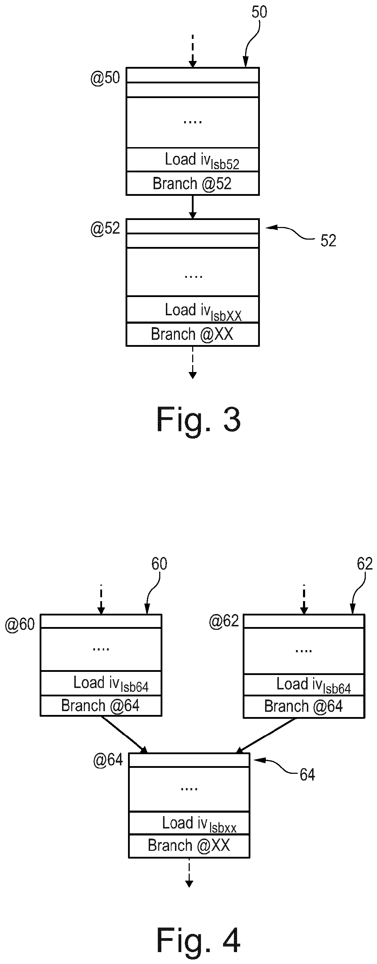

La figure 3 représente le premier type de structure. Plus précisément, la figure 3 représente un premier agencement de deux blocs de base 50 et 52 du code machine 32. Dans ce premier agencement, les blocs de base 50 et 52 sont systématiquement exécutés l'un après l'autre. Dans l'ordre d'exécution, le bloc de base 50 précède le bloc de base 52. Dans cette figure et les figures suivantes :
- l'ordre d'exécution des blocs de base est représenté par une flèche qui pointe du bloc de base précédent vers le bloc de base suivant,
- une flèche en pointillés qui pointe sur un bloc de base représenté indique que le ou les blocs de base qui précèdent ce bloc de base n'ont pas été représentés pour simplifier la figure,
- une flèche en pointillés qui pointe dans le vide depuis un bloc de base représenté indique que le ou les blocs de base suivants ce bloc de base représenté n'ont pas été représentés pour simplifier la figure,
- le symbole « ... » à l'intérieur d'un bloc de base indique que toutes les lignes d'instructions de ce bloc de base n'ont pas été représentées.

Chaque bloc de base se compose d'une succession de lignes d'instructions qui chacune comporte le cryptogramme Clⱼ* de l'instruction Iⱼ à exécuter et le code MACⱼ. De plus, chaque bloc de base débute par une adresse de branchement et se termine par une ligne d'instruction qui contient le cryptogramme d'une instruction de branchement. Plus précisément, dans le cas du premier type de structure, la première ligne du bloc de base, située à l'adresse de branchement, est la première ligne d'instruction du bloc de base. Le bloc de base du premier type ne comporte aucune ligne de donnée.

Sur la figure 2, les symboles « @50 » et « @52 » à côté de la première ligne de chaque bloc de base désignent les adresses de branchement, respectivement, des blocs de base 50 et 52. Le symbole « @XX » désigne l'adresse de branchement d'un autre bloc de base non représenté sur la figure 2.

Le symbole « Load iv_{lsbXX}» indiqué dans l'avant dernière ligne d'instruction du bloc de base indique que cette ligne d'instruction comporte le cryptogramme d'une instruction de chargement direct. Lorsque l'instruction de chargement direct est exécutée par le microprocesseur 2, elle provoque le chargement d'une nouvelle valeur iv_{lsbXX} dans un registre iV_{branch} du microprocesseur 2. La valeur iv_{lsbxx} est directement contenue dans l'instruction "Load iv_{lsbxx}". Autrement dit, la valeur iv_{lsbxx} est un opérande de l'instruction "Load iv_{lsbxx}". On notera que la valeur iv_{lsbxx} est ici codée sur 32 bits et a donc la même longueur qu'une instruction. Ainsi, bien que l'on parle dans ce texte d'une instruction de chargement direct, en pratique cette instruction est généralement implémentée sous la forme d'une première et d'une deuxième instructions de 32 bits du jeu d'instructions du microprocesseur 2. Typiquement, lorsqu'elles sont exécutées, la première instruction charge une première partie des bits de la valeur iv_{lsbxx} dans le registre iv_{branch} et la seconde instruction charge les autres bits de la valeur iv_{lsbxx} dans ce registre iv_{branch}.

Le symbole "xx" dans la valeur iv_{lsbxx} est un identifiant de cette valeur. En effet, à chaque fois que l'instruction "Load iv_{lsbxx}" est exécutée, elle provoque le chargement d'une valeur spécifique qui permet de déchiffrer les lignes d'instructions du bloc de base suivant. Ainsi, le symbole « Load iv_{lsb52}» indique que la valeur iv_{lsb52} est chargée dans le registre iv_{branch} avant que débute l'exécution du bloc de base 52.

Le symbole « Branch @XX» indiqué à l'intérieur de la dernière ligne d'instruction du bloc de base indique que cette dernière ligne comporte le cryptogramme d'une instruction de branchement direct qui, lorsqu'elle est exécutée par le microprocesseur 2, provoque un branchement direct vers l'adresse de branchement @XX. Lorsqu'elle est exécutée, cette instruction provoque aussi le chargement de la valeur contenue dans le registre iv_{branch} dans un registre iv_{lsbi} du microprocesseur 2. Le registre iv_{lsbi} contient les 32 bits de poids faible ("least significant bit" en anglais) du vecteur d'initialisation ivₖ actuellement utilisé pour déchiffrer les lignes d'instructions.

Dans ce mode de réalisation, le vecteur ivₖ est codé sur 128 bits. Les 32 bits de poids fort ("most significant bit" en anglais) sont enregistrés dans un registre iv_{msbi}. Les 64 bits situés entre les 32 bits de poids faible et les 32 bits de poids fort sont enregistrés dans un ou plusieurs registres collectivement désignés par le terme "registre iv_{ctei}". Chaque vecteur ivₖ est donc le résultat de la concaténation des bits des registres iv_{msbi}, iv_{ctei} et iv_{lsbi}. Ici, les valeurs contenues dans les registres iv_{msbi} et iv_{ctei} sont constantes durant toute l'exécution du code machine. Par exemple, les registres iv_{msbi} et iv_{ctei} sont chargés avec ces valeurs constantes au début de l'exécution du code machine 32. Ces valeurs constantes sont obtenues en déchiffrant les cryptogrammes iv_{msbi}* et iv_{ctei}* contenus dans le bloc 34.

Le même vecteur d'initialisation ivₖ est utilisé pour déchiffrer tous les cryptogrammes Clⱼ* de toutes les lignes d'instructions du même bloc de base BBₖ. L'indice k identifie sans ambiguïté le bloc de base BBₖ parmi l'ensemble des blocs de base du code machine 32. Dans les figures et dans la description, le symbole ivₖ est par la suite utilisé pour désigner de façon générale le vecteur d'initialisation à utiliser pour déchiffrer les lignes d'instructions du bloc de base BBₖ. De plus, dans les cas simples comme celui représenté sur la figure 3 où deux blocs de base se suivent dans l'ordre d'exécution du code machine 32, l'indice k est aussi utilisé pour indiquer l'ordre dans lequel ces blocs de base sont exécutés. Par exemple, la notation BBₖ₋₁ est, dans ces cas simples, utilisée pour désigner le bloc de base précédent systématiquement exécuté immédiatement avant le bloc de base BBₖ.

Ici, le vecteur d'initialisation ivₖ est unique pour chaque bloc de base BBₖ. Par « unique pour chaque bloc de base», on désigne le fait que la probabilité que deux blocs de base différents du code machine 32 soient chiffrés avec le même vecteur d'initialisation ivₖ est inférieure à une chance sur 100 ou sur 1000. En particulier, l'expression « unique pour chaque bloc de base» couvre donc le cas où les vecteurs d'initialisation ivₖ de tous les blocs de base sont systématiquement différents les uns des autres. Par exemple, dans un mode de réalisation simple, lors de la génération du code 32, les 32 bits de poids faible des vecteurs d'initialisation ivₖ de chaque bloc de base sont tirées de façon aléatoire ou pseudo-aléatoire dans l'ensemble {1 ; ...; 2^{Ninst}}.

Comme représenté sur la figure 3, dans le code 32, les 32 bits de poids faible du vecteur d'initialisation ivₖ sont chargés dans le registre iv_{branch} uniquement lors de l'exécution d'un bloc de base précédent le bloc de base BBₖ. Sur la figure 3, le vecteur d'initialisation iv_{lsbi52} nécessaire pour déchiffrer le bloc 52 est chargé lors de l'exécution du bloc 50.

La figure 4 représente un autre agencement possible de plusieurs blocs de base du code 32 dans le cas particulier de deux blocs de base précédents 60 et 62 et d'un bloc de base suivant 64. Les blocs 60, 62 et 64 sont des blocs de base du premier type. Ici, les blocs 60 et 64 sont, par exemple, identiques, respectivement, aux blocs 50 et 52 sauf que les 32 bits de poids faible du vecteur d'initialisation du bloc 64 est noté «iv_{lsb64}». Le bloc 62 est construit comme le bloc 60 et, en particulier, il se termine par deux lignes d'instructions qui codent les mêmes instructions que celles codées dans les deux dernières lignes du bloc 60. Toutefois, même si ces deux dernières lignes codent les mêmes instructions, les cryptogrammes de ces instructions sont différents parce que le bloc 62 est chiffré en utilisant un vecteur d'initialisation iv₆₂ différent du vecteur iv₆₀ utilisé pour chiffrer le bloc 60. Les autres lignes d'instruction du bloc 62 sont différentes de celles du bloc 60.

La figure 5 représente une partie de l'architecture du code machine 32 lorsqu'une fonction F₁ du code machine 32 appelle une fonction F₂ externe. A cet effet, le code machine de la fonction F₁ comporte un bloc 70 de base qui se termine par un appel au code machine 68 de la fonction F₂.

Le code machine 68 est agencé comme précédemment décrit pour le code machine 32. Il se compose donc d'une succession de blocs de base. Pour simplifier la figure 5, seul le premier bloc de base 80 et le dernier bloc de base 82 de ce code machine 68 ont été représentés. Ici, lorsque l'exécution de la fonction F₂ est terminée, c'est-à-dire après l'exécution du bloc 82, l'exécution du code machine 32 se poursuit par l'exécution d'un bloc 72 de base.

Les lignes d'instructions des blocs 70, 72, 80 et 82 sont chiffrées à l'aide, respectivement, des vecteurs iv₇₀, iv₇₂, iv₈₀ et iv₈₂.

Ici, le code machine 32 est un code dynamique qui a été généré indépendamment du code machine 68. Par exemple, le code machine 68 a été généré avant ou après que le code machine 32 ait été généré. Par exemple, le code machine 68 est le code d'une fonction d'une bibliothèque de fonctions pré-enregistrées. Dans ce cas, typiquement, le code machine 68 peut être appelé, à des instants différents, par différents codes machines. L'adresse @80 du bloc 80 n'est donc pas connue au moment où le code machine 32 est compilé. A cause de cela, le bloc 70 se termine par une ligne d'instruction contenant le cryptogramme d'une instruction de branchement indirect notée "BranchIV rd" sur la figure 5. Lorsque l'instruction "BranchIV rd" est exécutée par le microprocesseur 2, elle provoque un saut vers une adresse @ⱼ de branchement construite à partir du contenu actuel d'un registre rd du microprocesseur 2. La construction de l'adresse @ⱼ à partir du contenu du registre rd est typiquement réalisé à l'aide de la relation suivante : @ⱼ = rd + offset + 4, où :
- @ⱼ est l'adresse construite,
- rd est la valeur contenue dans le registre rd,
- "offset" est une valeur numérique prédéterminée, et
- le symbole "+4" indique qu'une valeur constante est ajoutée au résultat de la somme rd + offset de manière à ce que l'adresse @ⱼ soit égale à l'adresse de la ligne d'instruction qui suit immédiatement celle située à l'adresse rd + offset. Classiquement, la valeur "offset" est passée en tant qu'opérande de l'instruction "BranchIV rd".

A ce stade, on remarquera que lorsque la somme rd + offset correspond à l'adresse de la première ligne d'un bloc de base, la somme rd + offset + 4 correspond à l'adresse de la deuxième ligne de ce bloc de base. Ainsi, contrairement à une instruction de branchement indirect conventionnelle, l'instruction "BranchIV" provoque un saut directement vers la deuxième ligne du bloc de base suivant. La première ligne de ce bloc de base suivant n'est donc pas exécutée dans ce mode de réalisation.

Le registre rd est chargé avec une valeur permettant de construire l'adresse @80. Typiquement, le registre rd est chargé avec la valeur qui permet de construire l'adresse @80, au début de l'exécution du code binaire 30, par un chargeur de bibliothèque dynamique plus connu sous le terme anglais de "dynamic library loader" ou simplement "loader". Ce chargeur de bibliothèque dynamique est, par exemple, celui d'un système d'exploitation exécuté par la microprocesseur 2. Ce mécanisme de chargement de bibliothèque dynamique étant bien connu, il n'est pas décrit ici.

De même, puisque le code machine 68 à exécuter n'est pas connu au moment de la compilation du code machine 32, le vecteur iv₈₀ à utiliser pour déchiffrer les lignes d'instructions de ce bloc 80 n'est pas non plus connu. Il n'est donc pas possible d'introduire, lors de la compilation du code machine 32, l'instruction "Load iv_{lsb80}", précédemment décrite, dans le bloc 70 pour provoquer le chargement direct du vecteur iv_{lsb80} dans le registre iv_{branch}. A la place, lors de la génération du code machine 32, une instruction de chargement indirect d'un vecteur d'initialisation, notée "LoadIV rd", est introduite juste avant l'instruction "BranchIV rd". Lorsqu'elle est exécutée par le microprocesseur 2, l'instruction "LoadIV rd" provoque :
- la lecture du contenu de la ligne de donnée située à une adresse construite à partir du contenu du registre rd, puis
- la construction des 32 bits de poids faible du vecteur iv₈₀ à partir du contenu de la ligne de donnée lue, puis
- le chargement des 32 bits de poids faible ainsi construit dans le registre iv_{branch}.

Ici, dans le cas de l'instruction "LoadIV rd", la construction d'une adresse à partir du contenu du registre rd est réalisée à l'aide de la relation suivante : @ₖ = rd + offset, où "rd" et "offset" sont les mêmes que ceux utilisés dans l'instruction "BranchIV rd". Ainsi, l'adresse construite est l'adresse de la première ligne du bloc de base suivant. Par la suite, l'adresse de la première ligne du bloc de base BBₖ est notée @ₖ.

A cet effet, le bloc 80 est un bloc de base du deuxième type. Un bloc de base BBₖ du deuxième type est identique à un bloc de base du premier type sauf que la première ligne de ce bloc de base comporte une ligne de donnée LDₖ et non pas une ligne d'instruction. Cette ligne LDₖ contient les données permettant de construire les 32 bits de poids faible du vecteur d'initialisation ivₖ utilisé pour chiffrer les lignes d'instruction de ce bloc de base BBₖ. A cet effet, elle comporte un cryptogramme, noté iv_{lsbi}* sur les figures, des 32 bits de poids faible du vecteur ivₖ. Dans ce mode de réalisation, le cryptogramme iv_{lsbi}* est obtenu à l'aide de la relation suivante : iv_{lsbi}* = fₖₐ(iv_{lsbi} ; ivⱼ), où :
- iv_{lsbi} est la valeur des 32 bits de poids faible du vecteur ivₖ,
- ivⱼ est un vecteur d'initialisation, différent du vecteur ivₖ, utilisé pour chiffrer les lignes de données, et
- la fonction fₖₐ est la même que celle précédemment décrite dans le cas du chiffrement des instructions.

La structure d'une ligne de donnée telle que la ligne LDₖ est décrite plus loin en référence à la figure 8.

De façon similaire à ce qui a été décrit pour le vecteur ivₖ, le vecteur ivⱼ est codé sur 128 bits. Les 32 bits de poids fort ("most significant bit" en anglais) sont enregistrés dans un registre iv_{msbd}. Les 32 bits de poids faible sont enregistrés dans un registre iv_{lsbd}. Les 64 bits situés entre les 32 bits de poids faible et les 32 bits de poids fort sont enregistrés dans un ou plusieurs registres collectivement désignés par le terme "registre iv_{cted}". Chaque vecteur ivⱼ est donc le résultat de la concaténation des bits des registres iv_{msbd}, iv_{cted} et iv_{lsbd}. Ici, les contenus des registres i_{vmbd} et iv_{cted} sont constants durant toute l'exécution du code machine. Par exemple, les registres iv_{msbd} et iv_{cted} sont chargés avec ces valeurs constantes au début de l'exécution du code machine 32. De préférence, les valeurs chargées dans les registres iv_{msbd} et iv_{cted} sont différentes de celles chargées dans les registres iv_{msbi} et iv_{ctei}.

Le contenu du registre iv_{lsbd}, utilisé lors du chiffrement des données, est fonction de l'adresse @ₖ où est enregistrée la ligne LDₖ. À cet effet, le module 28 comporte une fonction préprogrammée Fᵢᵥ qui, à chaque adresse @ⱼ de la mémoire 4 associe une valeur différente du registre iv_{lsbd}. Par exemple, la fonction Fᵢᵥ est une fonction de hachage ou de chiffrement. On a donc la relation suivante : iv_{isbd} = Fᵢᵥ(@ⱼ), où iv_{lsbd} désigne le contenu du registre iv_{lsbd}.

Le code machine 68 peut être appelé à partir de différents blocs de base du code machine 32 ou à partir de différents codes machines. Ainsi, le bloc de base qui doit être exécuté après le bloc de base 82 dépend du bloc de base qui a appelé le code machine 68. Il n'est pas connu au moment de la génération du code machine 68. Par conséquent, comme le bloc 70, le bloc de base 82 est un bloc de base du premier type qui se termine par une ligne d'instruction qui code une instruction "LoadIV ra" suivie d'une ligne d'instruction qui code l'instruction « BranchlV ra ». Les instructions "LoadIV ra" et "BranchIV ra" sont identiques, respectivement, aux instructions "LoadIV rd" et "BranchIV rd" précédemment décrites sauf que le registre rd est remplacé par le registre ra.

Lorsque le code 68 est appelée à partir du bloc 70, l'adresse @72 de retour du code machine 68 est typiquement sauvegardée dans le registre ra du microprocesseur 2. Si le code machine 68 appelle lui-même une autre fonction, alors l'adresse @72 est sauvegardée dans la pile 46 d'exécution et restaurée dans le registre ra juste avant d'exécuter les instructions "LoadIV ra" et "BranchIV ra" du bloc 82.

Le bloc 72 est un bloc de base du deuxième type. Sa première ligne à l'adresse @72 est donc une ligne de donnée qui contient le cryptogramme iv_{lsbi}* nécessaire pour construire le vecteur iv₇₂ qui permet de déchiffrer ses lignes d'instruction.

La figure 6 représente les principaux registres décrits jusqu'à présent. Ces registres peuvent être des registres de l'ensemble 12 et/ou des registres du module 28. De préférence, les registres du module 28 sont utilisés pour enregistrer les informations utilisées pour chiffrer ou déchiffrer. Ainsi, de préférence, les registres iv_{msbi}, iv_{ctei}, ivi_{sbi}, iv_{msbd}, iv_{cted}, iv_{lsbd}, ivₚᵢₗₑ, iv_{ctep}, iv_{lsbp}, ivₜₑₘₚ, iv_{branch}, iv_{rnd} SOnt des registres contenus dans la mémoire 29. En plus des registres déjà décrits, le microprocesseur 2 comporte des registres iv_{cted}, iv_{isbd}, ivₚᵢₗₑ, iv_{ctep}, iv_{isbp}, ivₜₑₘₚ, iv_{branch}, iv_{rnd} et sp décrits plus en détails dans les chapitres suivants.

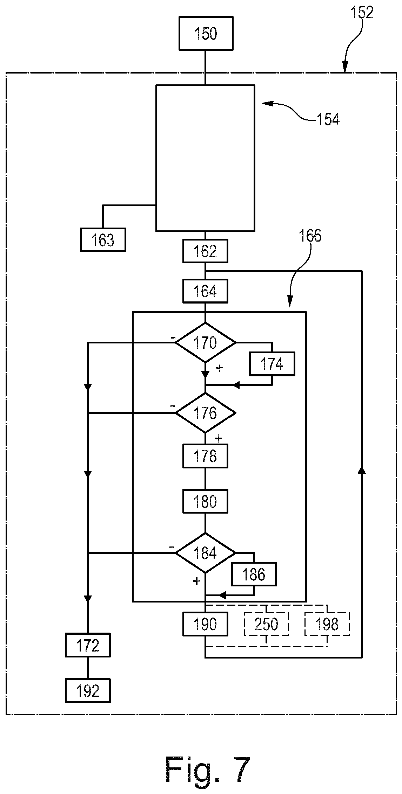

La figure 7 représente un procédé d'exécution du code binaire 30 par le microprocesseur 2.

Le procédé débute par une étape 150 de fourniture du code binaire 30 dans la mémoire 4. Pour cela, par exemple, le microprocesseur 2 recopie la copie 40 à l'intérieur de la mémoire 4 pour obtenir le code binaire 30 enregistré dans la mémoire 4.

Ensuite, lors d'une phase 152, le microprocesseur 2 exécute le code binaire 30 et, en particulier, le code machine 32.

Éventuellement, l'exécution du code binaire 30 commence par une étape 154 d'authentification de l'auteur de ce code binaire. Si toutes l'authentification a été réussie avec succès, alors le procédé se poursuit par une étape 162. À l'inverse, si l'authentification n'a pas été réussie avec succès, le module 28 considère alors que l'authentification de l'auteur du code binaire 30 a échoué et le procédé se poursuit par une étape 163. Lors de l'étape 163, l'exécution du code binaire 30 est arrêtée.

Lors de l'étape 162, le module 28 charge les cryptogrammes ka* et iv_{msbi}*, iv_{ctei}*, iv_{isbi}*, iv_{msbd}*, iv_{cted}*, ivₚᵢₗₑ*, iv_{ctep}^{*} contenus dans le bloc 34 et les déchiffre à l'aide de la clé sk_{CPU} contenue dans la mémoire 29. Le module 28 initialise les valeurs contenues dans les registres iv_{msbi}, iv_{ctei}, iv_{isbi}, iv_{msbd}, iv_{cted}, ivₚᵢₗₑ, iv_{ctep} à partir, respectivement, des cryptogrammes iv_{msbi}*, iv_{ctei}*, iv_{isbi}*, iv_{msbd}*, iv_{cted}*, ivₚᵢₗₑ*, iv_{ctep}* déchiffrés. À l'issue de l'étape 162, la clé ka et le vecteur d'initialisation ivₖ utilisé pour déchiffrer le premier bloc de base du code machine 32 sont contenus dans la mémoire 29.

Après l'étape 162, le microprocesseur 2 exécute, les uns après les autres, les blocs de base en commençant par le premier bloc de base BB1 du code machine 32.

L'exécution de chaque bloc de base consiste à exécuter, dans l'ordre où les lignes d'instruction LIⱼ de ce bloc de base sont enregistrées dans la mémoire 4, les instructions codées par chacune de ces lignes d'instruction.

Pour chacune des lignes d'instruction LIⱼ à exécuter du code machine 32, le microprocesseur 2 exécute les étapes suivantes.

Lors d'une étape 164, le microprocesseur 2 charge dans un registre de l'ensemble 12, la ligne d'instruction enregistrée à l'adresse @ⱼ contenue dans le compteur ordinal 26.

Ensuite, le module 28 procède à une étape 166 de sécurisation de l'instruction codée dans la ligne d'instruction chargée.

Le fonctionnement de l'étape 166 est maintenant décrit dans le cas de la ligne Llⱼ. Plus précisément, lors de l'étape 166, le module 28 réalise successivement les opérations suivantes.

Lors d'une opération 170, le module 28 vérifie s'il existe une erreur dans le cryptogramme Clⱼ* ou le code MACⱼ à l'aide du code ECC_{Lj} contenu dans la ligne Llⱼ chargée. Par exemple, pour cela, le module 28 construit, à l'aide d'une fonction préprogrammée et du cryptogramme Clⱼ* et du code MACⱼ, un code ECC_{Lj}'. Si le code ECCLⱼ' est différent du code ECCbⱼ, alors une erreur est détectée. Si une erreur est détectée, le module 28 procède immédiatement à une étape 172.

Lors de l'étape 172, le module 28 déclenche le signalement d'une faute d'exécution.

Ici, en parallèle de l'étape 172, si une erreur est détectée, le module 28 procède à une opération 174. Lors de l'opération 174, il corrige le cryptogramme Clⱼ* et le code MACⱼ à partir des informations contenues dans le code ECCLⱼ. À l'issue de l'étape 174, le cryptogramme Clⱼ* corrigé et le code MACⱼ corrigé sont utilisés à la place, respectivement, du cryptogramme Clⱼ* et du code MACⱼ contenus dans la ligne Llⱼ.

L'opération 170 permet notamment de détecter et de corriger des fautes introduites dans les lignes d'instruction stockées dans la mémoire 4.

À l'issue de l'opération 174 ou si aucune erreur n'a été détectée lors de l'opération 170, le procédé se poursuit par une opération 176.

Lors de l'opération 176, le module 28 vérifie l'intégrité et l'authenticité du cryptogramme Clⱼ* à l'aide du code MACⱼ. Par exemple, pour cela, le module 28 construit une étiquette du cryptogramme Clⱼ* puis chiffre cette étiquette avec la clé k' contenue dans sa mémoire 29. Si le cryptogramme ainsi construit est identique au code MACⱼ chargé, alors l'intégrité et l'authenticité du cryptogramme Clⱼ* est confirmée. Dans ce cas, le module 28 procède à une opération 178. Dans le cas contraire, le module 28 procède à l'étape 172.

L'opération 176 permet d'une part de valider l'authenticité de la ligne de code chargée et aussi de valider que, lors de l'opération 174, le cryptogramme Clⱼ* et/ou le code MACⱼ ont correctement été corrigés. La vérification de l'authenticité empêche le remplacement de la ligne de code par une autre ligne de code construite par un auteur qui ne connaît pas la clé k'.

Lors de l'opération 178, le module 28 déchiffre le cryptogramme Clⱼ* en utilisant la clé ka et le vecteur d'initialisation ivₖ pour obtenir l'instruction Iⱼ et le code ECCₗⱼ déchiffrés. La clé ka a été enregistrée dans la mémoire 29 lors de l'étape 162. Le vecteur ivₖ nécessaire pour déchiffrer le cryptogramme Clⱼ* a été enregistré dans les registres iv_{msbi}, iv_{ctei} et iv_{lsbi} lors de l'exécution de l'instruction "Branch @xx" ou ou "BranchIV rd" ou "BranchIV ra" codée dans le bloc de base précédent celui qui contient cette ligne Llⱼ actuellement traitée. Si la ligne Llⱼ est contenue dans le premier bloc de base BBᵢₙᵢ du code machine 32, c'est les valeurs initiales des registres iv_{msbi}, iv_{ctei} et iv_{lsbi} qui sont utilisées.

Ici, c'est l'exécution de l'instruction de branchement "Branch @xx" ou "BranchIV rd" ou "BranchIV ra", par l'unité 10, qui indique au module 28 qu'il doit remplacer le contenu du registre iv_{lsbi} par le contenu du registre iv_{branch}. Le contenu du registre iv_{branch} est mis à jour lors de l'exécution de l'instruction "Load ivₓₓ" ou "LoadIV rd" ou "LoadIV ra" qui précède l'instruction de branchement.

Ensuite, lors d'une opération 180, le module 28 enregistre l'instruction Iⱼ déchiffrée et le code ECCₗⱼ déchiffré dans la file 22.

Une fois que l'unité 10 a exécuté toutes les instructions qui précédent l'instruction I dans la file 22, c'est-à-dire lorsque l'instruction Iⱼ est la prochaine instruction à exécuter par l'unité 10, le module 28 procède à une opération 184.

Lors de l'opération 184, le module 28 vérifie s'il existe une erreur dans l'instruction Iⱼ contenue dans la file 22 à l'aide du code ECCₗⱼ associé à l'instruction Iⱼ et contenu dans cette même file 22. Cette opération est réalisée de façon similaire à ce qui a été décrit pour l'opération 170.

Si le module 28 détecte une erreur, alors il procède immédiatement à l'étape 172. De plus, en parallèle, lors d'une opération 186, le module 28 corrige l'instruction Iⱼ à l'aide du code ECClⱼ. L'opération 186 est similaire à l'opération 174.

Ensuite, à l'issue de l'opération 186 ou si aucune erreur n'a été détectée lors de l'opération 184, l'étape 166 se termine et le procédé se poursuit par une étape 190 d'exécution de l'instruction Iⱼ par l'unité 10.

Lors de l'étape 190, l'unité 10 exécute l'instruction Iⱼ.

Comme représenté sur la figure 7, en parallèle de l'étape 190, le procédé peut comporter :
- une étape 198 de sécurisation de la pile 46 d'exécution, et/ou
- une étape 250 de sécurisation des données traitées.

Ces étapes 198 et 250 sont décrites plus en détail dans les chapitres suivants.

L'opération 184 permet de détecter une modification de l'instruction Iⱼ qui interviendrait entre l'instant où elle est enregistrée dans la file 22 et l'instant où elle est exécutée par l'unité 10.

L'opération 184 permet aussi de déclencher une faute d'exécution si le flot de contrôle du code machine 32 a été modifié. En effet, une modification du flot de contrôle se traduit par le fait qu'après l'exécution du bloc de base BBₖ-₁ ce n'est pas le bloc de base BBₖ qui est exécuté mais un autre bloc de base BBₜ. Dans ce cas, lors de l'exécution du bloc BBₖ₋₁, le vecteur d'initialisation iVk-1 est chargé dans les registres iv_{msbi}, iv_{ctei} et iv_{lsbi}. Dès lors, lors de l'exécution du bloc BBₜ, le cryptogramme Clⱼ* est déchiffré à l'aide du vecteur ivₖ qui correspond au BBₖ et non pas à l'aide du vecteur ivₜ qui correspond au bloc BBₜ. Par conséquent, le déchiffrement du cryptogramme Clⱼ* à l'aide du vecteur ivₖ conduit à l'obtention d'une instruction Iⱼ et d'un code ECCₗⱼ incorrects et ceci est détecté lors de l'opération 184. L'opération 184 permet aussi bien de détecter une perturbation de l'exécution de l'opération "Branch @XX" que de l'opération " BranchlV ra" ou "BranchIV rd".

L'opération 184 permet aussi de détecter la permutation, dans la mémoire 4, des deux blocs de base BBₖ et BBₜ du deuxième type. En effet, si le bloc BBₖ est remplacé par le bloc BBₜ, alors, lors de l'exécution de l'instruction "LoadIV ra" du bloc BBₖ₋₁, la première ligne de donnée du bloc BBₜ est déchiffrée à l'aide d'un vecteur ivⱼ construit à partir de l'adresse @ₖ et non pas à partir de l'adresse @ₜ. Cela conduit donc à un déchiffrement incorrect du cryptogramme iv_{lsbi}* et donc à un déchiffrement incorrect de la première ligne d'instruction du bloc BBₜ. Ce déchiffrement incorrect de la première ligne d'instruction du bloc BBₜ est détecté lors de l'opération 184.

Lors de l'exécution du code machine 32, si des attaques conduisent à altérer une instruction à protéger ou à modifier le flot de contrôle, le microprocesseur 2 signale, lors de l'étape 172, une faute dans l'exécution du code machine 32. En réponse à un tel signalement, lors d'une étape 192, le microprocesseur 2 met en œuvre une ou plusieurs contre-mesures. De très nombreuses contre-mesures sont possibles. Les contre-mesures mises en œuvre peuvent avoir des degrés de sévérité très différents. Par exemple, les contre-mesures mises en œuvre peuvent aller d'un simple affichage ou une simple mémorisation d'un message d'erreur sans interrompre l'exécution normale du code machine 32 jusqu'à une mise hors service définitive du microprocesseur 2. Le microprocesseur 2 est considéré comme étant hors service lorsqu'il est définitivement placé dans un état où il est incapable d'exécuter un quelconque code machine. Entre ces degrés de sévérité extrêmes, il existe de nombreuses autres contre-mesures possibles telles que :
- l'indication par l'intermédiaire d'une interface homme-machine de la détection des fautes,
- l'interruption immédiate de l'exécution du code machine 32 et/ou sa réinitialisation, et
- la suppression du code machine 32 de la mémoire 4 et/ou la suppression de la copie 40 de sauvegarde et/ou la suppression des données secrètes.

De plus, ici, la contre-mesure mise en œuvre lors de l'étape 192 peut être sélectionnée en fonction de l'erreur détectée et donc en fonction de l'opération qui a conduit à la détection de cette faute. Par exemple, la contre-mesure sélectionnée ne sera pas la même selon que l'erreur a été détectée lors de l'opération 176 ou 184.

### CHAPITRE IV : SÉCURISATION DES DONNEES DE LA PILE D'EXECUTION :

A chaque fois qu'une fonction appelante déclenche l'exécution d'une fonction appelée, le contexte d'exécution de la fonction appelante est sauvegardé dans la pile 46. De plus, la fonction appelée sauvegarde également dans la pile 46 des données telles que des variables locales.

De façon similaire à ce qui a été décrit dans le cas des instructions Iⱼ, une donnée Dⱼ enregistrée dans la pile 46 peut être corrompue par la mise en œuvre d'attaques par dépassement de tampon ou par d'autres types d'attaques telle qu'une attaque par injection de fautes.

Pour rendre la pile 46 plus robuste vis-à-vis de telles attaques, ici, chaque donnée Dⱼ enregistrée dans la pile 46 est codée dans une ligne respective LDⱼ. La ligne LDⱼ est une ligne de donnée. Contrairement aux lignes d'instructions LIⱼ décrites dans le chapitre III, la ligne LDⱼ code une donnée Dⱼ à traiter par le microprocesseur et non pas une instruction Iⱼ exécutable par l'unité 10.

La structure d'une ligne LDⱼ est représentée sur la figure 8. Ici, la structure de la ligne LDⱼ est identique à la structure de la ligne Llⱼ sauf que le cryptogramme Clⱼ* est remplacé par un cryptogramme CDⱼ*. Étant donné que les codes MACⱼ et ECC_{Lj} de la ligne LDⱼ sont calculés comme déjà décrit dans le cas des lignes Llⱼ, ils sont ici désignés par les mêmes symboles et ne sont pas décrits à nouveau.

Le cryptogramme CDⱼ* est obtenu en chiffrant, avec la fonction fₖₐ, une concaténation CDⱼ. Ici, la fonction fₖₐ est la même que celle déjà décrite dans le cas des lignes Llⱼ. Ainsi, le cryptogramme CDⱼ* est obtenu à l'aide de la relation suivante : CDⱼ* = fₖₐ(CDⱼ ; ivₚ). La fonction fₖₐ est préprogrammée dans le module 28.

De façon similaire à ce qui a été décrit pour le vecteur ivₖ, le vecteur ivₚ est codé sur 128 bits. Les 32 bits de poids fort ("most significant bit" en anglais) sont enregistrés dans un registre ivₚᵢₗₑ du microprocesseur 2. Les 32 bits de poids faible sont enregistrés dans un registre iv_{lsbp} du microprocesseur 2. Les 64 bits situés entre les 32 bits de poids faible et les 32 bits de poids fort sont enregistrés dans un ou plusieurs registres du microprocesseur 2 collectivement désignés par le terme "registre iv_{ctep}". Chaque vecteur ivₚ est donc le résultat de la concaténation des bits des registres ivₚᵢₗₑ, iv_{ctep} et iv_{lsbp}. Ici, le contenu du registre iv_{ctep} est constant durant toute l'exécution du code machine. Par exemple, le registre iv_{ctep} est chargé avec cette valeur constante au début de l'exécution du code machine 32. Ici, la valeur contenue dans le registre iv_{ctep} est obtenue en déchiffrant le cryptograme iv_{ctep}* du bloc 34. Par exemple, le registre iv_{ctep} est chargée au début de l'exécution du code 32 avec une valeur constante différente de celles contenues dans les registres iv_{ctei} et iv_{cted}.

Le contenu du registre iv_{isbp}, utilisé lors du chiffrement des données, est fonction de l'adresse @ⱼ où est enregistrée la ligne LDⱼ contenant cette donnée. À cet effet, le module 28 utilise la fonction Fᵢᵥ précédemment décrite. On a donc la relation suivante : iv_{lsbp} = Fᵢᵥ(@ⱼ), où iv_{lsbp} désigne le contenu du registre iv_{lsbp}.

La concaténation CDⱼ est la concaténation de la donnée Dⱼ et d'un code ECC_{Dj}. Le code ECC_{Dj} permet de détecter et de corriger une erreur dans la donnée Dⱼ. Il est typiquement construit comme décrit pour le code ECCₗⱼ.

Le cryptogramme CDⱼ* diffère du cryptogramme Clⱼ* en ce que le vecteur d'initialisation ivₚ utilisé lors du chiffrement de la concaténation CDⱼ change en fonction de l'adresse de la ligne LDⱼ et aussi à chaque fois qu'une nouvelle fonction enregistre des données dans la pile 46.

La sécurisation des données Dⱼ sauvegardées dans la pile 46 va maintenant être décrite plus en détail en référence au procédé de la figure 9 et dans le cas particulier où elle est mise en œuvre en combinaison avec les enseignements des autres chapitres. Plus précisément, la sécurisation des données Dⱼ intervient à chaque fois que l'instruction exécutée lors de l'étape 190 est une instruction de lecture ou d'écriture dans la pile 46 d'une donnée Dⱼ. Le procédé de la figure 9 représente les opérations exécutées lors de l'étape 198 pour sécuriser les données Dⱼ.

À chaque fois que lors de l'étape 190, l'unité 10 exécute une instruction qui conduit à enregistrer une nouvelle donnée Dⱼ dans un registre, noté ici Rⱼ, de l'ensemble 12, lors d'une opération 252, le module 28 calcule le code ECC_{Dj} à partir de la donnée Dⱼ. Ce code ECC_{Dj} calculé est ensuite concaténé avec la donnée Dⱼ dans le registre Rⱼ.

Ultérieurement, lors d'une nouvelle exécution de l'étape 190, l'unité 10 exécute une instruction d'enregistrement de la donnée Dⱼ contenue dans le registre Rⱼ à l'adresse @ⱼ de la pile 46.

En réponse, lors d'une opération 254, le module 28 construit la ligne de code LDⱼ qui doit être enregistrée à l'adresse @ⱼ à partir de la donnée Dⱼ. Pour cela, lors de cette opération, le module 28 :
- met à jour le contenu du registre iv_{lsbp} à l'aide de la relation iv_{lsbp} = Fᵢᵥ(@ⱼ), puis
- chiffre la concaténation CDⱼ de la donnée Dⱼ et du code ECC_{Dj} à l'aide de la fonction fₖₐ et du vecteur d'initialisation ivₚ en utilisant la relation suivante : CDⱼ* = fₖₐ(CDⱼ ; ivₚ), puis
- calcule le code MACⱼ à partir du cryptogramme CDⱼ*, puis
- calcule le code ECC_{Lj} à partir du cryptogramme CDⱼ* et du code MACⱼ calculé.

Ensuite, la ligne LDⱼ construite est transférée et enregistrée dans la pile 46 à l'adresse @ⱼ.

Si la prochaine instruction à exécuter lors de l'étape 190 est une instruction de chargement d'une ligne LDⱼ, alors, l'unité 10 exécute cette instruction et la ligne LDⱼ est chargée dans un registre du microprocesseur 2. Typiquement, cette instruction de chargement comporte un opérande qui indique à quelle adresse @ⱼ se trouve la ligne LDⱼ à charger. Ici, lorsque l'unité 10 exécute cette instruction de chargement, elle charge la ligne LDⱼ dans un registre Rⱼ de l'ensemble 12 par exemple.

Ensuite, le module 28 exécute des opérations 270, 274, 276 et 278 identiques, respectivement, aux opérations 170, 174, 176 et 178 du procédé de la figure 7 sauf que ce sont les codes correspondants contenus dans la ligne LDⱼ qui sont utilisés et non pas ceux contenus dans une ligne Llⱼ.

De plus, lors de l'opération 278, le module 28 met à jour le contenu du registre iv_{lsbp} nécessaire pour déchiffrer le cryptogramme CDⱼ* à partir de l'adresse @ⱼ et en utilisant la relation iv_{lsbp} = Fᵢᵥ(@ⱼ).

Une fois que le cryptogramme CDⱼ* a été déchiffré, lors d'une opération 280, le module 28 enregistre la donnée Dⱼ déchiffrée et le code ECC_{Dj} déchiffré dans le registre Rⱼ en attendant que cette donnée soit traitée par l'unité 10.

Lorsque la prochaine instruction qui va être exécutée par l'unité 10 est une instruction qui traite la donnée Dⱼ, le module 28 procède à des opérations 284 et 286. Le module 28 identifie que la prochaine instruction à exécuter va traiter la donnée Dⱼ car cette instruction comporte généralement un opérande qui identifie le registre Rⱼ dans lequel est enregistré la donnée Dⱼ. Les opérations 284 et 286 sont, par exemple, identiques, respectivement, aux opérations 184 et 186 du procédé de la figure 7, sauf qu'ici, c'est la donnée Dⱼ et le code ECC_{Dj} qui sont utilisés et non pas l'instruction Iⱼ et le code ECCₗⱼ.

Ensuite, à l'issue de l'opération 286 ou si aucune erreur n'a été détectée lors de l'opération 284, l'unité 10 exécute l'instruction qui traite la donnée Dⱼ.

Le procédé de sécurisation des données décrit ici présente en outre les mêmes avantages que ceux présentés au chapitre III notamment à cause du fait que la structure de la ligne LDⱼ est pratiquement identique à celle de la ligne Llⱼ.

De plus, le fait de chiffrer la donnée Dⱼ à l'aide d'un vecteur d'initialisation iv_{lsbp} qui dépend de l'adresse @ⱼ permet de détecter si une ligne LDⱼ a été déplacée à l'intérieur de la pile 46. En effet, si deux lignes LD₁ et LD₂ sont permutées, une telle permutation des lignes LD₁ et LD₂ n'est pas nécessairement détectée lors de l'opération 270 ou 276. Par contre, puisque la donnée D₁ est chiffrée avec un vecteur d'initialisation iv₁ qui dépend de l'adresse @₁, si la ligne LD₁ est déplacée et se situe à une adresse @₂ dans la pile 46, lors du chargement de cette ligne à partir de cette adresse @₂, le cryptogramme CD₁* va être déchiffré à l'aide du vecteur d'initialisation iv₂ et non pas à l'aide du vecteur iv₁. Un tel déchiffrement incorrect de la donnée D₁ et du code ECC_{D1} est alors détecté lors de l'opération 284.

### CHAPITRE V : SÉCURISATION CONTRE LES ATTAQUES PAR DEPASSEMENT DE TAMPON

Comme déjà expliqué en référence à la figure 5 dans le cas du jeu d'instructions RISV-V, lorsque la fonction F₂ est appelée à partir de la fonction F₁, l'adresse de retour @ra2 à utiliser pour poursuivre l'exécution de la fonction F₁ après l'exécution de la fonction F₂ est enregistrée dans un registre ra de l'ensemble 12. Par contre, si au cours de l'exécution de la fonction F₂, une fonction F₃ est appelée, alors à ce moment-là, l'adresse @ra2 et, plus généralement, le contexte d'exécution de la fonction F₂, est sauvegardé dans la pile 46.

Le contexte d'exécution comporte notamment toutes les informations nécessaires à la reprise de l'exécution de la fonction F₂ une fois que l'exécution de la fonction F₃ est terminée. Cela comprend, en outre :
- l'adresse @ra2,
- la valeur d'un pointeur sp qui pointe vers le haut de la pile 46,
- éventuellement, les valeurs de certaines données en cours de traitement par la fonction F₂.

Lors de son exécution, la fonction F₃ peut, elle aussi, sauvegarder des données dans la pile 46, dans un espace prédéterminé de la mémoire appelée « tampon » ou « buffer » en anglais. Il est possible d'écrire dans ce tampon des données plus grandes que l'espace alloué à ce tampon pour sauvegarder ces données. Cela conduit à ce qui est connu sous les termes de « dépassement de tampon » ou « débordement de tampon » et plus connu sous le terme anglais de « buffer overflow ».

Lorsque ce dépassement de tampon est intentionnel, il peut être utilisé pour remplacer l'adresse @ra2 par une autre adresse @rat choisie par un attaquant. Dans ces conditions, à l'issue de l'exécution des fonctions F₂ et F₃, ce n'est pas l'exécution de la fonction F₁ qui est poursuivie, mais l'exécution des instructions situées à l'adresse @rat qui débute. Un dépassement de tampon peut donc être utilisé pour détourner le flot de contrôle vers un code développé et conçu par un attaquant. Typiquement, ce genre d'attaque est mis en œuvre pour contourner des mesures de sécurité et/ou obtenir des informations secrètes sur le fonctionnement de la fonction sécurisée.

Dans ce chapitre, une solution pour lutter contre ce type d'attaque est décrite. Ici, cette solution est décrite dans le cas particulier où l'enseignement des autres chapitres, et en particulier du chapitre IV, est, en même temps, mis en œuvre.

Plus précisément, pour rendre plus difficile les attaques par dépassement de tampon, le vecteur ivₚ utilisé pour chiffrer l'adresse de retour @ra2 sauvegardée dans la pile 46 est différent de celui utilisé lors de la sauvegarde dans la pile 46 de données par la fonction appelée F₃.

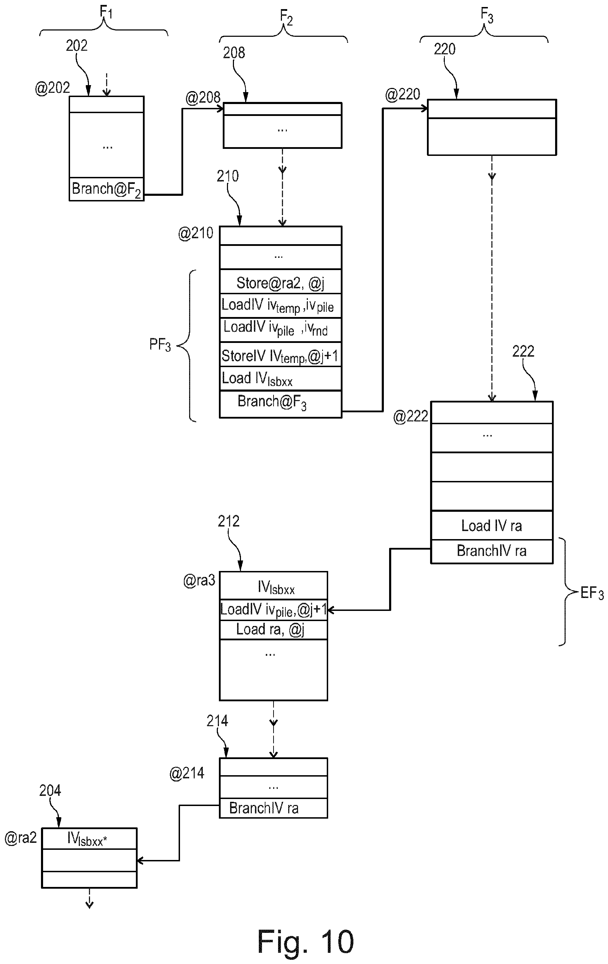

A cet effet, le prologue PF₃ et l'épilogue EF₃ de l'appel à la fonction F₃ sont modifiés comme représenté sur la figure 10.

La figure 10 est divisée en trois colonnes verticales désignées par les références F₁, F₂ et F₃. Les blocs de base des fonctions F₁, F₂ et F₃ sont représentés, respectivement, dans les colonnes F₁, F₂ et F₃.

Les lignes d'instruction des blocs de base des fonctions F₁, F₂ et F₃ sont sécurisées comme décrit dans le chapitre III. Par conséquent, les blocs de base des fonctions F₁, F₂ et F₃ sont, soit des blocs de base du premier type, soit des blocs de base du deuxième type tel que précédemment décrit.

La fonction F₁ comporte un bloc de base 202 et un bloc de base 204. Le bloc 202 est ici un bloc de base du premier type. Le bloc de base 202 se termine par une ligne d'instruction codant une instruction de branchement, notée « Branch @F₂ » sur la figure 10, vers la première ligne d'instruction du premier bloc de base 208 de la fonction F₂. On rappelle ici que lorsque l'instruction notée « Branch @F₂ » est exécutée, l'adresse @ra2 de retour est stockée dans le registre ra de l'ensemble 12.

Le bloc de base 204 est le bloc de base de la fonction F₁ qui doit être exécutée quand l'exécution de la fonction F₂ est terminée. Sa première ligne est donc située à l'adresse @ra2. Ici, l'exécution du bloc de base 204 est déclenchée suite à l'exécution d'une instruction de branchement indirect située à la fin de la fonction F₂. Par conséquent, ici, le bloc de base 204 est un bloc de base du deuxième type.

La fonction F₂ débute par le bloc de base 208 et se termine par un bloc de base 214. Ici, ces blocs de base 208 et 214 sont des blocs de base du premier type.

Entre ces blocs 204 et 214, la fonction F₂ comporte un bloc de base 210 et un bloc de base 212. Le bloc de base 210 comporte les lignes d'instructions du prologue PF₃ qui est exécuté par le microprocesseur 2 avant le début de l'exécution du premier bloc de base 220 de la fonction F₃.

La dernière ligne d'instruction du prologue PF₃ code une instruction de branchement direct, notée « Branch @F₃ », vers la première ligne d'instruction du bloc 220. Lors de l'exécution de cette instruction, l'adresse @ra3 de retour de la fonction F₃ est stockée dans le registre ra. Par conséquent, au préalable, l'adresse @ra2 qui se trouvait dans ce registre ra doit être sauvegardée dans la pile 46. A cet effet, le prologue PF₃ comporte une ligne d'instruction notée « Store @ra2, @ⱼ » qui, lorsqu'elle est exécutée par le microprocesseur 2, sauvegarde l'adresse @ra2 à l'adresse @ⱼ dans la pile 46. Comme expliqué au chapitre IV, c'est donc une ligne LDⱼ contenant un cryptogramme CDⱼ* construit à partir de l'adresse @ra2 qui est sauvegardé à l'adresse @ⱼ dans la pile 46.

On rappelle ici que le cryptogramme CDⱼ* est obtenu en utilisant le vecteur ivₚ. Ce vecteur ivₚ est le résultat de la concaténation des bits contenus dans les registres ivₚᵢₗₑ, iv_{ctep} et iv_{lsbp}. Le contenu du registre iv_{lsbp} est égal à Fᵢᵥ(@ⱼ), où @ⱼ est l'adresse dans la pile 46 où doit être sauvegardé la donnée.

Par la suite, on note ivₐ la valeur contenue dans le registre ivₚᵢₗₑ au moment où l'instruction « Store @ra2, @ⱼ » est exécutée. Ainsi, l'adresse @ra2 est chiffrée à l'aide de la valeur ivₐ contenue dans le registre ivₚᵢₗₑ et de l'adresse @ⱼ.

Ensuite, entre les instructions « Store @ra2, @ⱼ » et « Branch @F₃ », le prologue PF₃ comporte des lignes d'instructions codant des instructions pour :
- sauvegarder la valeur ivₐ dans la pile 46, et
- remplacer la valeur ivₐ du registre ivₚᵢₗₑ par une nouvelle valeur iv_{b}.

A cet effet, le prologue PF₃ comporte successivement :
- une ligne d'instruction codant une instruction notée « LoadIV ivₜₑₘₚ, ivₚᵢₗₑ »,
- une ligne d'instruction codant une instruction notée « LoadIV ivₚᵢₗₑ, iv_{rnd} », et
- une ligne d'instruction codant une instruction notée « StoreIV ivₜₑₘₚ, @ⱼ₊₁ ».

Lorsqu'elle est exécutée par le microprocesseur 2, l'instruction « LoadIV ivₜₑₘₚ, ivₚᵢₗₑ » provoque l'enregistrement du contenu du registre ivₚᵢₗₑ dans le registre ivₜₑₘₚ. Ainsi, après l'exécution de cette instruction, la valeur ivₐ est sauvegardée dans le registre ivₜₑₘₚ.

Lorsqu'elle est exécutée par le microprocesseur 2, l'instruction « LoadIV ivₚᵢₗₑ, iv_{rnd} » provoque l'enregistrement dans le registre ivₚᵢₗₑ du contenu du registre iv_{rnd}.

Le registre iv_{rnd} est ici un registre qui est connecté à un générateur de nombres aléatoires ou pseudo-aléatoires. Ainsi, chaque fois que son contenu est lu ou chargé dans un autre registre, le registre iv_{rnd} contient une nouvelle valeur construite par le générateur de nombres aléatoires ou pseudo-aléatoires.

Ainsi, après l'exécution de l'instruction « LoadIV ivₚᵢₗₑ, iv_{rnd} », le registre ivₚᵢₗₑ contient la nouvelle valeur iv_{b} et cette nouvelle valeur iv_{b} a été générée de façon aléatoire ou pseudo-aléatoire.

Lorsque l'instruction « StorelV ivₜₑₘₚ, @ⱼ₊₁ » est exécutée par le microprocesseur 2, elle provoque la sauvegarde de la valeur ivₐ contenue dans le registre ivₜₑₘₚ dans la pile 46 à l'adresse notée @ⱼ₊₁. Par exemple, l'adresse @ⱼ₊₁ est l'adresse qui suit immédiatement l'adresse @ⱼ dans la pile 46. Puisque l'instruction « StoreIV ivₜₑₘₚ, @ⱼ₊₁ » est exécutée après l'instruction « LoadIV ivₚᵢₗₑ, iv_{rnd} », la valeur ivₐ est chiffrée en utilisant la nouvelle valeur iv_{b} contenue dans le registre ivₚᵢₗₑ.

Enfin, comme déjà décrit dans le chapitre III, le prologue PF₃ comporte aussi une ligne d'instruction codant l'instruction « Load IV_{lsbxx} » pour charger dans le registre iv_{branch} la valeur qui sera utilisée pour déchiffrer les instructions Iⱼ du bloc de base suivant, c'est-à-dire ici, du bloc de base 220 de la fonction F₃.

Le bloc 212 est le bloc de base de la fonction F₂ exécuté juste après l'exécution de la fonction F₃. Puisque l'exécution du bloc de base est déclenchée suite à l'exécution d'un branchement indirect, le bloc 212 est ici un bloc de base du deuxième type.

Le premier bloc de base 220 de la fonction F₃ est un bloc de base du premier type.

La fonction F₃ se termine par un bloc de base 222 du premier type qui comporte une première partie de l'épilogue EF₃. Cette première partie EF₃ se termine par une ligne d'instruction codant une instruction « BranchlV ra ». Lorsque l'instruction "BranchIV ra" est exécutée par le microprocesseur 2, cela provoque un saut vers la seconde ligne du bloc de base 212. Pour cela, elle est précédée d'une ligne d'instruction comportant l'instruction « LoadIV ra ». Ces instructions ont déjà été expliquées dans le chapitre III.

L'épilogue EF₃ comporte également une seconde partie qui débute à la première ligne d'instruction du bloc 212. Cette seconde partie de l'épilogue EF₃ comporte successivement :
- une ligne d'instruction codant une instruction « LoadIV ivₚᵢₗₑ, @ⱼ₊₁ », puis
- une ligne d'instruction codant une instruction « Load ra, @ⱼ ».

L'exécution de l'instruction « LoadIV ivₚᵢₗₑ, @ⱼ₊₁ » par le microprocesseur 2 provoque le déchiffrement et le chargement dans le registre ivₚᵢₗₑ de la donnée contenue dans la ligne de données située à l'adresse @ⱼ₊₁. Comme expliqué ci-dessus, lors de l'exécution du prologue PF₃, c'est le cryptogramme de la valeur ivₐ chiffrée en utilisant la valeur iv_{b} qui est sauvegardé dans cette ligne. Ainsi, l'exécution de l'instruction « LoadIV ivₚᵢₗₑ, @ⱼ₊₁ » provoque le remplacement de la valeur iv_{b} contenue dans le registre ivₚᵢₗₑ par la valeur ivₐ sauvegardée dans la pile 46.

L'exécution de l'instruction « Load ra, @ⱼ » provoque le déchiffrement et le chargement dans le registre ra de la donnée contenue dans la ligne de donnée située à l'adresse @ⱼ. Comme expliqué ci-dessus, lors de l'exécution du prologue PF₃, c'est le cryptogramme de l'adresse @ra2 chiffrée en utilisant la valeur ivₐ qui est sauvegardé dans cette ligne. Ainsi, l'exécution de l'instruction «Load ra, @ⱼ » provoque le déchiffrement et le chargement dans le registre ra de la donnée contenue dans cette ligne.

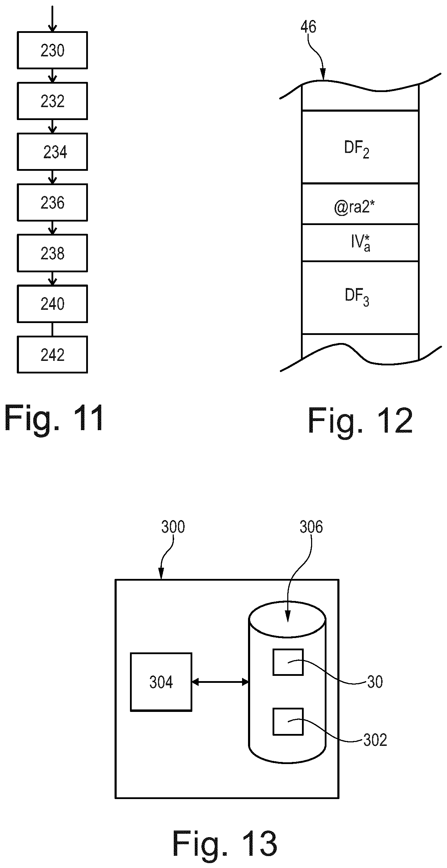

Le fonctionnement du procédé pour sécuriser la pile 46 contre les attaques par dépassement de tampon va maintenant être décrit plus en détails en référence aux figures 11 et 12 dans le cas particulier des fonctions F₁, F₂ et F₃ précédemment décrites. Les instructions des fonctions F₁, F₂ et F₃ sont exécutées conformément à ce qui a été décrit dans le chapitre III. On suppose aussi que la fonction F₁ est la fonction principale, également connue sous le nom anglais de « main », du code machine 32.

Lors d'une étape 230, au cours de l'exécution de la fonction F₁, le bloc 202 est exécuté pour appeler la fonction F₂. Lors de l'exécution du bloc 202, le prologue de l'appel à la fonction F₂ est exécuté. L'exécution de ce prologue provoque le chargement de l'adresse @ra2 dans le registre ra du microprocesseur 2. Il provoque également la sauvegarde d'au moins une partie du contexte d'exécution de la fonction F₁ dans la pile 46. Ensuite, l'instruction « Branch @F₂ » est exécutée, ce qui provoque un saut sur la première ligne d'instruction de la fonction F₂ située à l'adresse @208.

Lors d'une étape 232, la fonction F₂ s'exécute. Lors de son exécution, la fonction F₂ sauvegarde dans la pile 46 des données DF₂ (Figure 12) comme, par exemple, des variables locales. A chaque fois qu'une donnée est sauvegardée dans la pile 46, le procédé du chapitre IV est mis en œuvre. Lors de l'exécution de la fonction F₂, le registre ivₚᵢₗₑ contient la valeur ivₐ.

Lors d'une étape 234, au cours de l'exécution de la fonction F₂, le bloc 210 est exécuté. Le prologue PF₃ de l'appel à la fonction F₃ est alors exécuté par le microprocesseur 2.

Lors de l'étape 234, les opérations classiquement exécutées lors de l'exécution d'un prologue d'un appel à une fonction sont réalisées. Ces opérations étant classiques, elles ne sont pas reprises ici. On rappelle simplement que l'exécution de ces opérations provoque la sauvegarde des différentes données du contexte d'exécution de la fonction F₂ dans la pile 46. Ces données comportent par exemple, la valeur d'un pointeur sp qui pointe sur le sommet de la pile 46 et d'autres informations nécessaires pour reprendre correctement l'exécution de la fonction F₂ après l'exécution de la fonction F₃. De plus, l'exécution du prologue PF₃ conduit à exécuter les unes après les autres les lignes d'instruction représentées sur la figure 10. L'exécution de ces lignes d'instruction par le microprocesseur 2 provoque dans l'ordre :
- la sauvegarde de l'adresse @ra2 sur le sommet de la pile 46, puis
- la sauvegarde de la valeur actuelle ivₐ du registre ivₚᵢₗₑ dans le registre ivₜₑₘₚ, puis
- le chargement de la nouvelle valeur iv_{b} dans le registre ivₚᵢₗₑ, puis
- la sauvegarde de la valeur ivₐ contenue dans le registre ivₜₑₘₚ dans la pile 46, puis
- le chargement d'une nouvelle valeur dans le registre iv_{lsbi} permettant de déchiffrer les lignes d'instructions LIⱼ du bloc 220, puis
- l'exécution de la première ligne d'instruction du bloc 220.

L'adresse @ra2 est sauvegardée dans la pile 46 comme toutes les autres données sauvegardées dans sa pile, c'est-à-dire en mettant en œuvre le procédé du chapitre IV. L'adresse @ra2 est sauvegardée dans la pile 46 à un moment où la valeur contenue dans le registre ivₚᵢₗₑ est égale à la valeur ivₐ. Par conséquent, c'est seulement un cryptogramme @ra2* obtenu en chiffrant l'adresse @ra2 à l'aide de la valeur ivₐ qui est enregistré dans la pile 46. Sur la figure 12, ce cryptogramme est noté "@ra2*". De façon similaire, la valeur ivₐ est sauvegardée dans la pile 46 en mettant en œuvre le procédé du chapitre IV. Au moment où la valeur ivₐ est sauvegardée, le registre ivₚᵢₗₑ contient la valeur iv_{b}. Ainsi, le cryptogramme ivₐ* de la valeur ivₐ sauvegardée dans la pile 46 est obtenu en chiffrant la valeur ivₐ à l'aide de la valeur iv_{b}.

Lors d'une étape 236, après l'exécution du prologue PF₃, la fonction F₃ est exécutée. Lors de son exécution, la fonction F₃ enregistre des données DF₃ dans la pile 46 en mettant en œuvre le procédé du chapitre IV. Ici, la fonction F₃ est une fonction feuille, c'est-à-dire une fonction qui n'appelle pas une autre fonction au cours de son exécution. Dans ces conditions, le contenu du registre ivₚᵢₗₑ est laissé inchangé entre l'exécution du prologue PF₃ et l'exécution de l'épilogue EF₃. Ainsi, chaque donnée sauvegardée dans la pile 46 par la fonction F₃ est chiffrée à l'aide de la valeur iv_{b} qui est différente de la valeur ivₐ.

Lors d'une étape 238, lorsque l'exécution de la fonction F₃ se termine, l'épilogue EF₃ est exécuté. L'exécution de l'épilogue EF₃ provoque, en plus de l'exécution des opérations conventionnelles d'un épilogue :
1) Le déchiffrement du cryptogramme iv_{lsbxx}* contenu dans la première ligne de données du bloc 212 et le chargement de la valeur déchiffrée dans le registre iv_{lsbi} (exécution de l'instruction « LoadIV ra »), puis
2) Un saut sur la première ligne d'instruction du bloc 212 (exécution de l'instruction « BranchIV ra »), puis
3) Le remplacement de la valeur iv_{b} contenue dans le registre ivₚᵢₗₑ par la valeur ivₐ (exécution de l'instruction « LoadIV ivₚᵢₗₑ, @ⱼ₊₁ »), puis
4) Le chargement à partir de la pile 46 de l'adresse @ra2 dans le registre ra (exécution de l'opération « Load ra, @ⱼ »).

Les opérations 1) et 2) ci-dessus ont déjà été décrites en détails dans le chapitre III.

Lors de l'opération 3) ci-dessus, le cryptogramme ivₐ* est lu dans la pile 46 puis déchiffré à l'aide de la valeur contenue dans le registre ivₚᵢₗₑ, c'est-à-dire à l'aide de la valeur iv_{b}.

Lors de l'opération 4) ci-dessus, le cryptogramme @ra2* est lu dans la pile 46 et déchiffré à l'aide de la valeur courante contenue dans le registre ivₚᵢₗₑ, c'est-à-dire à ce stade, à l'aide de la valeur ivₐ.

Ensuite, lors d'une étape 240, l'exécution de la fonction F₂ se poursuit en utilisant la valeur ivₐ contenue dans le registre ivₚᵢₗₑ pour déchiffrer et chiffrer les données DF₂ sauvegardées dans la pile 46.

Lors d'une étape 242, lorsque l'exécution de la fonction F₂ est terminée, l'exécution de la fonction F₁ reprend. Pour cela, le branchement vers l'adresse @ra2 contenue dans le registre ra est exécuté. Ici le basculement de l'exécution de la fonction F₁ vers la fonction F₂, puis le retour de l'exécution de la fonction F₂ vers la fonction F₁ sont mis en œuvre comme décrit en détails dans le cas des fonctions F₂ et F₃.

Si une attaque par dépassement de tampon est mise en œuvre en forçant la fonction F₃ à enregistrer une donnée qui dépasse la taille allouée pour sauvegarder les données DF₃, alors le cryptogramme @ra2* peut être remplacé par un autre cryptogramme noté @rat*. Puisque le remplacement du cryptogramme @ra2* par le cryptogramme @rat* intervient au cours de l'exécution de la fonction F₃, le cryptogramme @rat* est le résultat du chiffrement d'une adresse @rat à l'aide de la valeur iv_{b} actuellement contenue dans le registre ivₚᵢₗₑ.

Lors de l'exécution de l'épilogue EF₃, le cryptogramme @rat* est déchiffré à l'aide de la valeur ivₐ et non pas à l'aide de la valeur iv_{b}. Dès lors, l'adresse de retour déchiffrée est différente de l'adresse @rat. L'attaquant ne peut donc pas choisir l'adresse vers laquelle le flot de contrôle est détourné.

Enfin, dans ce mode de réalisation qui met aussi en œuvre ce qui a été décrit dans le chapitre IV, l'attaquant ne connaît pas les clés ka et k'. Il ne peut donc pas construire correctement un code MACⱼ et le cryptogramme CDⱼ* correspondant à l'adresse @rat. Ainsi, si la ligne de donnée contenant le cryptogramme @ra2* est remplacée par une ligne de donnée contenant le cryptogramme @rat*, un tel remplacement est détecté lors des opérations 270 et 276 de vérification. Ainsi, une erreur d'exécution est détectée avant l'exécution du bloc 214.

### CHAPITRE VI : SECURISATION DES DONNEES

Le code binaire 30, en plus du code machine 32, peut comporter des données à traiter lors de l'exécution du code machine 32. De plus, lors de l'exécution du code machine 32, celui-ci peut générer des données. Ces données sont typiquement contenues dans la partie 44 de la mémoire 4.

Ce qui a été décrit dans le chapitre IV pour sécuriser les données sauvegardées dans la pile 46 est, de préférence, également mis en œuvre pour sécuriser les données enregistrées dans la partie 44. En particulier, chaque donnée enregistrée dans la partie 44 est codée dans une ligne LDⱼ dont la structure est identique à ce qui a été décrit dans le cas de la pile 46. Des lors, l'écriture et la lecture d'une donnée dans la partie 44 sont réalisés comme décrit au chapitre IV sauf que le terme "pile 46" est remplacé par le terme "partie 44".

### CHAPITRE VII : GENERATION DU CODE BINAIRE

La figure 13 représente un compilateur 300 apte à générer automatiquement le code binaire 30 à partir d'un code source 302. À cet effet, le compilateur 300 comporte typiquement un microprocesseur 304 programmable et une mémoire 306. La mémoire 306 contient les instructions et les données nécessaires pour, lorsqu'elles sont exécutées par le microprocesseur 304, générer automatiquement le code binaire 30 à partir du code source 302. En particulier, lors de la compilation du code source 302, le microprocesseur 304 génère automatiquement les vecteurs d'initialisation ivₖ appropriés et les lignes de code Llⱼ et LDⱼ. Lors de cette compilation, le compilateur 300 introduit également automatiquement dans le code machine les instructions précédemment décrites pour la mise en œuvre des procédés des figures 7, 9 et 11. La conception et la réalisation d'un tel compilateur sont à la portée de l'homme du métier à partir des explications données dans cette description. Par exemple, pour cela, le compilateur 30 repère et identifie automatiquement les instructions de branchement et, en fonction de l'instruction de branchement identifiée, introduit automatiquement avant et/ou après les instructions nécessaires pour la mise en œuvre des procédés décrits ici.

### CHAPITRE VIII : VARIANTES :

### Variantes de l'appareil 1 :

La mémoire 4 peut aussi être une mémoire non volatile. Dans ce cas, il n'est pas nécessaire de copier le code binaire 30 à l'intérieur de cette mémoire avant le lancement de son exécution puisqu'il s'y trouve déjà.

En variante, la mémoire 4 peut aussi être une mémoire interne intégrée à l'intérieur du microprocesseur 2. Dans ce dernier cas, elle est réalisée sur le même substrat que les autres éléments du microprocesseur 2. Enfin, dans d'autres configurations, la mémoire 4 se compose de plusieurs mémoires dont certaines sont des mémoires internes et d'autres des mémoires externes.

La mémoire principale 4 peut comporter une première mémoire volatile de grande capacité et une seconde mémoire volatile de plus petite capacité mais dans laquelle les opérations de lecture et d'écriture sont plus rapides. La deuxième mémoire est connue sous le terme de « mémoire cache ». La mémoire cache peut être une mémoire externe au microprocesseur 2 ou une mémoire interne du microprocesseur 2. Dans certains modes de réalisation, plusieurs mémoires caches de niveaux différents peuvent être utilisées.

De nombreuses architectures matérielles différentes sont possibles pour réaliser le module 28. En particulier, le module 28 peut être composé par la combinaison de plusieurs blocs matériels du microprocesseur 2 remplissant des fonctions respectives et situés chacun dans une aire différente de la puce du microprocesseur 2.

Dans un autre mode de réalisation, le module 28 est remplacé par un module logiciel qui, lorsqu'il est exécuté par l'unité 10, réalise les mêmes fonctions et opérations que celles décrites pour le module 28.

### Variantes de la sécurisation du code machine :

En variante, seule la structure du deuxième type décrite en référence à la figure 5 est utilisée pour tous les blocs de base du code machine 32. Dans ce cas, ce qui a précédemment été décrit dans le cas particulier des branchements indirects et aussi mis en œuvre pour les branchements directs.

D'autres modes de réalisation du contenu de la première ligne d'un bloc BBₖ du deuxième type sont possibles. Par exemple, ce contenu n'est pas nécessairement chiffré. Dans une autre variante, ce contenu est chiffrée en utilisant une autre clé que l'adresse @ₖ de la première ligne. Par exemple, le contenu de la première ligne est seulement chiffré avec la clé ka. Le contenu de la première ligne peut aussi contenir, à la place du cryptogramme iv_{isbi}*, un cryptogramme @_{lsbi}* d'une adresse @_{lsbi}. Dans ce cas, lorsque l'instruction "LoadIV ra" ou "LoadIV rd" est exécutée, elle provoque la lecture et le déchiffrement du cryptogramme @_{lsbi}* pour obtenir l'adresse @_{lsbi}. Ensuite, le contenu à partir duquel sont construits les 32 bits de poids faible du vecteur ivₖ est lu à l'adresse @_{lsbi}.

D'autres modes de réalisation sont possibles pour construire le vecteur ivₖ à partir de l'adresse @ₖ. Par exemple, une table d'association est chargée dans la mémoire 29 avant ou au début de l'exécution du code 32. Cette table associe à chaque adresse @ₖ d'un bloc BBₖ du deuxième type, le contenu qui permet de construire les 32 bits de poids faible du vecteur ivₖ. Par exemple, ce contenu est identique à celui décrit dans le cas où il est enregistré dans la première ligne du bloc de base du deuxième type. Le fonctionnement de ce mode de réalisation est identique à celui précédemment décrit sauf que l'instruction "LoadIV ra" ou "LoadIV rd" provoque, lorsqu'elle est exécutée par le microprocesseur 2, la lecture du contenu du registre iv_{lsbi} à partir de la table d'association et non pas dans la première ligne du bloc de base BBₖ. Dans ce cas, les blocs de base du deuxième type sont remplacés par des blocs de base du premier type et l'instruction "BranchIV rd" ou "BranchIV ra" est modifiée pour provoquer un saut vers la première ligne du bloc de base suivant et non pas vers la deuxième ligne de ce bloc de base.

Il n'est pas non plus nécessaire de construire le vecteur ivₖ en utilisant les contenus des registres iv_{msbi} et iv_{ctei}. Par exemple, en variante, les contenus des registres iv_{msbi} et iv_{ctei} sont construits à partir du contenu du registre iv_{lsbi}. Par exemple, le vecteur ivₖ codé sur 128 bits est obtenu en concaténant les 32 bits du registre iv_{lsbi} quatre fois avec eux-mêmes. Dans ce cas, les registres iv_{msbi} et iv_{ctei} peuvent être omis.

En variante, certaines fonctions ou parties du code binaire 30 ne sont pas sécurisées. Pour gérer l'exécution d'un tel code binaire qui comporte à la fois une fonction sécurisée et des fonctions non-sécurisées, le jeu d'instructions du microprocesseur 2 peut être complété par :
- une instruction d'activation d'un mode sécurisé de fonctionnement du microprocesseur 2, et
- une instruction de désactivation de ce mode sécurisé.

Dans ce cas, l'instruction d'activation du mode sécurisé se trouve dans le code binaire 30 juste avant l'appel à la fonction sécurisée et l'instruction de désactivation du mode sécurisé se trouve juste après la fin de la fonction sécurisée. Lorsque l'instruction d'activation du mode sécurisé est chargée par le microprocesseur 2, en réponse, le module 28 commence à traiter les instructions et les données suivantes du code binaire comme décrit dans les chapitres précédents. Lorsque l'instruction de désactivation du mode sécurisé est chargée par le microprocesseur 2, en réponse, le module 28 est désactivé. Dans ce dernier cas, le traitement des instructions et des données suivantes du code binaire ne sont pas traitées par le module 28 mais directement chargées dans la file 22 ou dans les registres de l'ensemble 12.

En variante, une instruction « update » est ajoutée au jeu d'instructions du microprocesseur. Lorsque cette instruction « update » est exécutée par le microprocesseur 2, elle provoque le chargement, dans le registre iv_{lsbi}, de la valeur actuellement contenue dans le registre iv_{branch}. Dès lors, dans ce cas, l'utilisation d'un nouveau vecteur d'initialisation ivₖ est déclenchée autrement que par l'exécution d'une instruction de branchement. Dans ce cas, le procédé décrit peut aussi être mis en œuvre avec des instructions de branchement implicites. En effet, la dernière instruction d'un bloc de base qui se termine par une instruction de branchement implicite, est alors l'instruction « update ». Au lieu d'implémenter une instruction « update » en tant qu'instruction à part dans le jeu d'instructions du microprocesseur, il est possible d'ajouter un bit supplémentaire à chaque instruction du jeu d'instructions du microprocesseur 2 et de déclencher le changement de vecteur d'initialisation ivₖ uniquement lorsque ce bit supplémentaire prend une valeur spécifique.

Le code ECCₗⱼ peut être remplacé par un simple code détecteur d'erreur permettant seulement de détecter une erreur dans l'instruction Iⱼ avec laquelle il est concaténé. Un code détecteur d'erreur ne permet pas de corriger l'erreur détectée. Dans ce cas, l'opération 186 de correction de l'erreur est omise. Dès lors, dès que le module 28 détecte une erreur dans une instruction Iⱼ déchiffré, par exemple, l'exécution de la fonction sécurisée est systématiquement interrompue.

Dans une variante simplifiée, le code ECCₗⱼ est omis. Dans ce cas, le cryptogramme Clⱼ* est seulement le cryptogramme de l'instruction Iⱼ. Dans ce mode de réalisation, le microprocesseur 2 n'est plus capable de détecter une modification de l'instruction Iⱼ qui interviendrait entre l'instant où celle-ci est enregistrée dans la file 22 et l'instant où elle est exécutée par l'unité 10.

Le code ECC_{Lj} peut être remplacé par un simple code détecteur d'erreur Dans ce cas, l'opération 174 de correction est omise.

Dans une autre variante, le code ECC_{Lj} est construit de manière à permettre seulement la détection d'une erreur, soit seulement dans le cryptogramme Clⱼ* soit seulement dans le code MACⱼ.

Le code ECC_{Lj} peut être omis. Dans ce cas, une erreur dans le cryptogramme Clⱼ* ou dans le code MACⱼ ne peut être détectée que lors de l'exécution de l'opération 176 de vérification de l'intégrité et de l'authenticité du cryptogramme. La détection d'une erreur à l'aide d'un code MAC est généralement plus complexe qu'à l'aide d'un simple code détecteur d'erreur ou d'un simple code correcteur d'erreur. De plus, lorsque le code ECC_{Lj} est omis, dans le cas où il existe une erreur dans le cryptogramme Clⱼ* ou le code MACⱼ, il n'est pas possible de corriger cette erreur. Dans ce dernier cas, par exemple, l'exécution de la fonction sécurisée est donc systématiquement interrompue en cas d'erreur.

Dans un autre mode de réalisation, c'est le code MACⱼ qui est omis. L'opération 176 est alors également omise.

### Variantes de la sécurisation des données :

La structure des lignes LDⱼ utilisée pour sécuriser les données sauvegardée dans la mémoire 4 peut être modifiée. En particulier, les différentes variantes de la structure d'une ligne Llⱼ décrites ci-dessus sont applicables à la structure des lignes LDⱼ. Lorsque la structure de la ligne LDⱼ est modifiée, le procédé de la figure 9 doit être adapté de façon correspondante pour tenir compte de ces modifications. Par exemple, si le code ECC_{Dj} est remplacé par un simple code détecteur d'erreur, alors l'opération 286 de correction de l'erreur est omise. Dès lors, dès que le module 28 détecte une erreur dans une donnée Dⱼ déchiffrée, par exemple, l'exécution de la fonction sécurisée est systématiquement interrompue.

En variante, la fonction Fᵢᵥ est identique à la fonction fₖₐ sauf qu'elle est appliquée à l'adresse @ⱼ. La fonction Fᵢᵥ peut aussi utiliser le même algorithme de chiffrement que la fonction fₖₐ mais avec une clé de chiffrement différente de la clé ka.

Dans une variante simplifiée, la fonction Fᵢᵥ est la fonction identité. Dans ce cas, les contenus des registres iv_{isbd} et iv_{lsbp} sont systématiquement égaux à l'adresse @ⱼ.

Dans d'autres modes de réalisation, pour détecter un déplacement d'une ligne LDⱼ, le code MACⱼ est calculé en fonction du vecteur ivₚ. Par exemple, dans le cas d'une ligne de donnée LDⱼ sauvegardée dans la pile 46, le code MACⱼ est calculé à partir de la concaténation du cryptogramme CDⱼ* et du vecteur ivₚ. Le code MACⱼ peut aussi être calculé à partir d'une combinaison du cryptogramme CDⱼ* et du vecteur ivₚ telle que la combinaison suivante : CDⱼ* XOR ivₚ. Dans le cas où le code MACⱼ dépend du vecteur ivₚ, alors il peut être utilisé à la place du code ECC_{Dj} pour détecter une erreur en cas de déplacement de la ligne LDⱼ dans la pile 46. En effet, dans ce cas, lors de la vérification de l'intégrité et de l'authenticité du cryptogramme CDⱼ*, le module 28 :
- obtient le vecteur ivₚ à partir du contenu des registres ivₚᵢₗₑ, iv_{ctep} et iv_{isbp}, puis
- combine le cryptogramme CDⱼ* avec le vecteur ivₚ obtenu, puis
- vérifie l'intégrité et l'authenticité de cette combinaison à partir du code MACⱼ contenu dans la même ligne LDⱼ.
Si cette ligne LDⱼ a été déplacée, le vecteur ivₚ obtenu est différent de celui attendu. Dès lors, l'intégrité de la combinaison du cryptogramme CDⱼ* et du vecteur ivₚ ne peut pas être vérifiée, ce qui déclenche le signalement d'une faute d'exécution. On remarquera que dans ce mode de réalisation, il est possible de détecter un déplacement de la ligne LDⱼ sans même avoir à déchiffrer le cryptogramme CDⱼ*. Dans cette variante, pour détecter un déplacement de la ligne LDⱼ, le code ECC_{Dj} peut être omis.

De façon similaire à ce qui a été décrit ci-dessus pour le code MACⱼ, le code ECC_{Lj} peut aussi être construit de manière à dépendre du vecteur ivₚ. Dans ce cas, le déplacement de la ligne LDⱼ est détecté lors de la vérifications du code ECCLⱼ. Dès lors, pour détecter un déplacement de la ligne LDⱼ, le code ECC_{Dj} peut être omis.

Dans les modes de réalisation décrits jusqu'à présent, à la fois la donnée Dⱼ et le code ECC_{Dj} sont codés en fonction du vecteur ivₚ puisque le cryptogramme CDⱼ* est chiffré à l'aide de ce vecteur ivₚ. En variante, soit seulement la donnée Dⱼ soit seulement le code ECC_{Dj} est codé en fonction du vecteur ivₚ. Par exemple, dans la ligne de donnée, le cryptogramme de la donnée Dⱼ est obtenu à partir d'une fonction de chiffrement qui n'utilise pas le vecteur ivₚ, tandis que le cryptogramme ECC_{Dj}* du code ECC_{Dj} est obtenu à l'aide de la fonction de chiffrement fₖₐ(ECC_{Dj} ; ivₚ). Dans ce cas, lors de l'opération 278, le module 28 déchiffre le cryptogramme de la donnée Dⱼ sans utiliser le vecteur ivₚ et déchiffre le cryptogramme ECC_{Dj}* en utilisant ce vecteur ivₚ. Ensuite, le reste du procédé est identique à ce qui a déjà été décrit. Dans un mode de réalisation simplifiée, puisque la donnée Dⱼ n'a pas besoin d'être codée en fonction du vecteur ivₚ, il est aussi possible de ne pas la chiffrer. Par exemple, la ligne de code contient alors la donnée Dⱼ en clair et le cryptogramme ECC_{Dj}*. Dès lors, lors de l'opération 278, le déchiffrement de la donnée Dⱼ est omis puisqu'il suffit de l'extraire de la plage de bits dans laquelle elle est contenue dans la ligne LDⱼ.

A l'inverse, il est aussi possible de modifier la structure des lignes LDⱼ de manière à ce que seule la donnée Dⱼ soit codée en fonction du vecteur ivₚ. Par exemple, la ligne LDⱼ comporte un cryptogramme Dⱼ* de la donnée Dⱼ obtenue en la chiffrant à l'aide de la fonction fₖₐ(Dⱼ ; ivₚ) et un cryptogramme ECC_{Dj}* obtenu en chiffrant le code ECC_{Dj} à l'aide d'une fonction de chiffrement indépendante du vecteur ivₚ. Lors de l'opération 270, le module 28 déchiffre le cryptogramme Dⱼ* à l'aide du vecteur ivₚ et déchiffre le cryptogramme ECC_{Dj}* sans utiliser ce vecteur ivₚ.

Jusqu'à présent, c'est une fonction de chiffrement qui a été décrite comme exemple de mode de réalisation permettant de coder la donnée Dⱼ ou le code ECC_{Dj} en fonction du vecteur ivₚ. Cette fonction de chiffrement peut toutefois être aussi simple qu'une simple opération « OU Exclusif » logique entre la donnée Dⱼ et le vecteur ivₚ ou entre le code ECC_{Dj} et le vecteur ivₚ.

Toutes les variantes décrites dans le cas particulier de la sécurisation des données sauvegardées dans la pile 46 s'appliquent au cas de la sécurisation des données sauvegardées ailleurs dans la mémoire 4. En particulier, ces variantes s'applique à la ligne LDₖ de donnée des blocs de base du deuxième type.

### Variantes de la sécurisation de la pile d'exécution :

La sécurisation de la pile 46 a été décrit dans le cas particulier où l'adresse de retour @ra2 est sauvegardée dans la pile uniquement au moment où la fonction F₂ appelle la fonction F₃. Toutefois, ce qui a été décrit s'applique aussi aux situations où l'adresse de retour @ra2 est sauvegardée dans la pile 46 au moment où la fonction F₂ est appelée par la fonction F₁. Dans ce cas, ce qui a été précédemment décrit s'applique à l'identique sauf que c'est le prologue et l'épilogue de la fonction F₂ qui sont modifiés.

La nouvelle valeur iv_{b} contenue dans le registre ivₚᵢₗₑ peut être générée de nombreuses façons différentes. Par exemple, la nouvelle valeur iv_{b} est égale à la valeur ivₐ auquel a été ajoutée un incrément prédéterminé. Dans ce cas, la valeur initiale contenue dans le registre ivₚᵢₗₑ est par exemple une valeur prédéfinie chargée au démarrage du microprocesseur 2.

Il existe d'autres possibilités pour chiffrer l'adresse @ra2 à l'aide d'un vecteur d'initialisation différent de celui utilisé pour chiffrer les données DF₃. Par exemple, en variante, le prologue PF₃ est modifié pour réaliser dans l'ordre les opérations suivantes lorsqu'il est exécuté par le microprocesseur 2 :
1) La valeur ivₐ contenue dans le registre ivₚᵢₗₑ est sauvegardée dans un registre ivₜₑₘₚ₁.
2) La valeur ivₐ contenue dans le registre ivₚᵢₗₑ est remplacée par une nouvelle valeur iv_{b} générée, par exemple, de façon aléatoire comme précédemment décrit.
3) L'adresse @ra2 contenue dans le registre ra est sauvegardée dans la pile 46. Le cryptogramme @ra2* enregistré dans la pile 46 est donc le résultat du chiffrement de l'adresse @ra2 à l'aide de la valeur iv_{b} actuellement contenue dans le registre ivₚᵢₗₑ.
4) La valeur iv_{b} contenue dans le registre ivₚᵢₗₑ est sauvegardée dans un registre ivₜₑₘₚ₂.
5) La valeur iv_{b} contenue dans le registre ivₚᵢₗₑ est remplacée par la valeur ivₐ contenue dans le registre ivₜₑₘₚ₁.
6) La valeur iv_{b} contenue dans le registre ivₜₑₘₚ₂ est sauvegardée dans la pile 46. Le cryptogramme iv_{b}* enregistré dans la pile 46 est donc le résultat du chiffrement de la valeur iv_{b} à l'aide de la valeur ivₐ actuellement contenue dans le registre ivₚᵢₗₑ.

Ensuite, au cours de l'exécution de la fonction F₃, à chaque fois que des données sont sauvegardées dans la pile 46, celles-ci sont chiffrées à l'aide de la valeur ivₐ contenue dans le registre ivₚᵢₗₑ. Ce mode de réalisation permet donc bien de chiffrer l'adresse @ra2 à l'aide d'un vecteur d'initialisation différent de celui utilisé pour chiffrer les données sauvegardées dans la pile 46 lors de l'exécution de la fonction F₃. Le fonctionnement de ce mode de réalisation se déduit des explications données en référence aux figures 10 à 12.

D'autres modes de réalisation du prologue PF₃ et de l'épilogue EF₃ sont possibles. Par exemple, moyennant l'utilisation de registres temporaires supplémentaires, l'ordre des opérations peut être modifié. Ainsi, par exemple, le cryptogramme ivₐ* peut être sauvegardé dans la pile 46 avant le cryptogramme @ra2*. Pour cela, par exemple, il faut successivement:
1) Sauvegarder la valeur ivₐ dans un registre temporaire ivₜₑₘₚ₃,
2) Générer et sauvegarder la valeur iv_{b} dans le registre ivₚᵢₗₑ,
3) Sauvegarder dans la pile 46 le contenu du registre ivₜₑₘₚ₃,
4) Sauvegarder la valeur iv_{b} dans un registre ivₜₑₘₚ₄,
5) Restaurer la valeur ivₐ dans le registre ivₚᵢₗₑ à partir du contenu du registre ivₜₑₘₚ₃,
6) Sauvegarder dans la pile 46 le contenu du registre ra,
7) Restaurer la valeur iv_{b} dans le registre ivₚᵢₗₑ à partir du contenu du registre ivₜₑₘₚ₄.

En variante, seule l'adresse de retour est chiffrée avant d'être sauvegardée dans la pile 46. Les autres données sauvegardées dans la pile 46 ne sont pas chiffrées ou chiffrées à l'aide d'une autre clé. Par exemple, chaque adresse de retour sauvegardée dans la pile 46 est chiffrée, par le module 28, avec la clé ka tandis que les autres données sauvegardées dans la pile 46 ne sont pas chiffrées. Dans ce cas, si une donnée enregistrée dans la pile 46 provoque un dépassement de tampon qui remplace le cryptogramme @ra2* par une cryptogramme @rat*, alors, après l'exécution des fonctions F₃ et F₂, l'exécution du code se poursuit par l'exécution de l'instruction située à l'adresse fₖₐ⁻¹(@rat*). Or l'attaquant ne connaît pas la clé ka et ne connaît donc pas l'adresse correspondant à fₖₐ⁻¹(@rat*). Il ne peut donc pas prévoir vers quelle adresse l'exécution du code 30 va être détournée. Cela rend donc aussi plus difficile les attaques par dépassement de tampon.

Dans un mode de réalisation très simplifié, le chiffrement des données DF₃ sauvegardées dans la pile 46 n'est pas mis en œuvre. Dans ce cas, la valeur ivₐ et les données DF₃ sauvegardées dans la pile 46 ne sont pas chiffrées. Toutefois, même dans ce cas simplifié, le fait que l'adresse @ra2 sauvegardée dans la pile 46 soit chiffrée différemment de ce qui est fait pour les données DF₃ rend les attaques par dépassement de tampon plus difficiles.

### Variantes communes aux différents chapitres précédents

A partir du moment où une ligne de code comporte au moins un des éléments du groupe composé d'un code d'authentification de message, d'un code correcteur d'erreur et d'un code détecteur d'erreur, il est possible de détecter une modification du contenu de cette ligne. Ainsi, pour détecter une modification du contenu d'une ligne d'instruction ou d'une ligne de donnée, un seul quelconque des éléments de ce groupe est nécessaire.

Dans un mode de réalisation très simplifié, aucun des codes détecteur ou correcteur d'erreur et aucun des codes MACⱼ précédemment décrits ne sont mis en œuvre. Dans ce cas, une erreur dans le déchiffrement d'une donnée ou d'une instruction peut conduire à l'incapacité pour l'unité 10 d'exécuter une instruction et donc à l'arrêt brutal de l'exécution du code machine 30.

Le chiffrement et le déchiffrement ont été décrits dans le cas particulier où les fonctions fₖₐ et fₖₐ⁻¹ sont des algorithmes de chiffrement qui utilisent un "vecteur d'initialisation" et, de préférence, aussi une clé secrète ka. Toutefois, les fonctions fₖₐ et fₖₐ⁻¹ peuvent aussi être des algorithmes de chiffrement/déchiffrement dans lesquels un vecteur d'initialisation n'est pas nécessaire. Toutefois, tout ce qui a été décrit ici s'applique à l'identique à un tel algorithme de chiffrement/déchiffrement en remplaçant simplement le terme "vecteur d'initialisation" par le terme "clé".

La fonction utilisée pour générer le cryptogramme CDⱼ* peut être différente de celle utilisée pour générer le cryptogramme Clⱼ*. Par exemple, ces deux fonctions diffèrent par le fait qu'elles utilisent des clés de chiffrement différentes.

Dans une autre variante, les clés ka et k' sont les mêmes.

La clé ka peut être pré-enregistrée dans la mémoire 29. Dans ce cas, le cryptogramme ka* peut être omis du bloc 34.

Le cryptogramme k'* de la clé k' chiffrée avec la clé publique pk_{CPU} peut être enregistré dans le bloc 34. Dans ce cas, la clé k' n'a pas besoin d'être pré-enregistrée dans la mémoire 29.

Une ligne de code peut être plus longue qu'un mot-machine. Dans ce cas, chaque ligne de code se compose de plusieurs mots-machine généralement situés à des adresses mémoires immédiatement consécutives dans la mémoire 4. Dans ce cas, une ligne de code est chargée dans le microprocesseur 2 non pas en une seule opération de lecture, mais en exécutant plusieurs opérations de lecteur. Chaque opération de lecture charge dans le microprocesseur un mot-machine respectif de la ligne de code.

En variante, l'opération 176 ou 276 se poursuit systématiquement par l'opération 178 ou 278 même si l'intégrité ou l'authenticité du cryptogramme n'a pas pu être confirmée. Dans ce cas, l'opération 176 ou 276 sert à déclencher le signalement d'une faute d'exécution sans interrompre l'exécution du code binaire.

Selon le jeu d'instructions utilisé par le microprocesseur 2, les instructions décrites telles que "LoadIV", "BranchIV", "StoreIV" correspondent chacune à une seule instruction de ce jeu ou, au contraire, à un groupe de plusieurs instructions de ce jeu.

Tout ce qui a été décrit au chapitre III peut être mise en œuvre indépendamment de ce qui a été décrit dans les autres chapitres. Par exemple, les étapes 198 et 250 peuvent être omises et le procédé de la figure 11 n'est pas mis en œuvre.

Tout ce qui a été décrit au chapitre IV peut être mis en œuvre indépendamment de ce qui a été décrit dans les autres chapitres. Par exemple, ce qui a été décrit au chapitre IV peut être mis en œuvre :
- dans le contexte d'un code machine dépourvu d'instruction de branchement indirect et d'instruction "LoadIV ra",
- sans mettre en œuvre l'enseignement du chapitre III pour sécuriser les instructions du code machine,
- sans mettre en œuvre l'enseignement du chapitre V pour sécuriser la pile 46 contre les attaques par dépassement de tampon.

Tout ce qui a été décrit au chapitre V peut également être mis en œuvre indépendamment de ce qui a été décrit dans les autres chapitres. Par exemple, ce qui a été décrit au chapitre V peut être mis en œuvre :
- dans le contexte d'un code machine dépourvu d'instruction de branchement indirect et d'instruction "LoadIV ra",
- sans mettre en œuvre l'enseignement du chapitre III pour sécuriser les instructions du code machine,
- sans mettre en œuvre l'enseignement du chapitre VI pour sécuriser les données enregistrées dans la partie 44 de la mémoire 4.

Tous les modes de réalisation décrits dans ce texte et, en particulier, les différentes variantes, peuvent être combinés entre eux.

### CHAPITRE IX : AVANTAGES DES MODES DE RÉALISATION DÉCRITS :

### Avantages de la sécurisation du code machine :

Puisque le chargement du vecteur iv_{lsbi} nécessaire au déchiffrement des lignes d'instructions du bloc de base BBₖ est déclenché lors de l'exécution du bloc de base BBₖ₋₁, l'intégrité du flot de contrôle est assurée. En effet, si suite à l'exécution du bloc de base BBₖ₋₁, c'est un bloc de base BBₜ qui est exécuté au lieu du bloc de base BBₖ alors les lignes d'instruction du bloc de base BBₜ sont déchiffrées à l'aide du vecteur ivₖ chargé. Les lignes d'instruction du bloc de base BBₜ ne sont donc pas déchiffrées à l'aide du vecteur ivₜ utilisé pour chiffrer ces lignes d'instruction du bloc de base BBₜ. Ainsi, le déchiffrement des lignes d'instruction du bloc BBₜ est incorrect, ce qui est détecté. Il est donc difficile de détourner le flot d'exécution du bloc BBk vers le bloc BBₜ.

L'instruction de chargement indirect ne contient pas directement la valeur du vecteur ivₖ mais seulement l'identifiant d'un registre destiné à contenir l'adresse @ₖ du bloc BBₖ. Ainsi, le bloc de base BBₖ₋₁ contient seulement des instructions qui permettent, au moment de l'exécution de ce bloc de base BBₖ₋₁, de construire ce vecteur ivₖ à partir du contenu du registre identifié. Dès lors, le bloc de base BBₖ₋₁ peut être compilé indépendamment du bloc de base suivant BBₖ. Grâce à cela, l'utilisation d'un branchement indirect à la fin d'un bloc de base est rendue possible tout en conservant la possibilité de contrôler et de garantir l'intégrité du flot de contrôle.

Le fait d'enregistrer le contenu à charger dans le registre iv_{lsbi} dans la première ligne du bloc de base du deuxième type permet de charger simplement ce contenu dans le microprocesseur. De plus, l'introduction d'une telle première ligne de donnée lors de la génération du code machine est simple.

Le fait que le contenu à charger dans le registre iv_{lsbi} soit enregistré dans la mémoire 4 sous forme chiffrée, augmente la sécurité.

Le fait que le cryptogramme iv_{lsbi}* soit déchiffré en utilisant l'adresse @ⱼ rend la permutation, dans la mémoire 4, de deux blocs du deuxième type difficile et détectable.

Le chiffrement des instructions Iⱼ permet de garantir la confidentialité du code binaire 30, ce qui rend le « Reverse Engineering » du code binaire très difficile. La vérification de l'intégrité du cryptogramme CIⱼ* ou CDⱼ* permet de détecter les modifications du code binaire provoquées, par exemple, par des attaques telles que l'injection de fautes dans la mémoire 4. Le fait de vérifier l'authenticité des instructions et des données permet de détecter et de rendre très difficile l'ajout d'instructions supplémentaires dans le code binaire 30 par un attaquant, par exemple, pour y introduire des logiciels malveillants tels que des virus. En effet, même si l'attaquant connaît l'algorithme utilisé pour chiffrer les instructions Iⱼ ou les données Dⱼ, il ne connaît pas la clé secrète k' utilisée pour construire le code MACⱼ.

La vérification, à l'aide du code ECC_{Ij} ou ECC_{Dj}, de l'existence d'une erreur dans l'instruction Iⱼ ou la donnée Dⱼ juste avant qu'elle soit utilisée permet de détecter une modification de cette instruction ou de cette donnée Dⱼ. De telles modifications peuvent être provoquées par injection de fautes. Ainsi, l'utilisation du code ECC_{Ij} ou ECC_{Dj} permet de détecter ce type d'attaque.

Le fait que le code ECC_{Ij} ou ECC_{Dj} soit un code correcteur d'erreur et pas seulement un code détecteur d'erreur, permet de rendre le procédé d'exécution plus robuste vis-à-vis des attaques par injection de fautes. En effet, dans ce cas, le code correcteur d'erreur permet souvent de corriger l'erreur introduite dans l'instruction Iⱼ ou dans la donnée Dⱼ de sorte que malgré la présence de telles erreurs, la fonction sécurisée continue de s'exécuter correctement.

L'utilisation du code ECC_{Lj} permet de détecter plus rapidement une erreur dans le cryptogramme Clⱼ* ou CDⱼ* ou dans le code MACⱼ que si seul le code MACⱼ était utilisé pour cela. L'utilisation du code ECC_{Lj} permet donc d'accélérer l'exécution du code binaire.

L'utilisation d'un code correcteur d'erreur pour le code ECC_{Lj} permet de rendre le procédé revendiqué plus robuste vis-à-vis des attaques par injection de fautes dans la mémoire 4 ou dans le support 6. En effet, dans ce cas, le code correcteur d'erreur permet souvent de corriger le cryptogramme CIⱼ* ou CDⱼ* ou le code MACⱼ de sorte que malgré la présence de telles erreurs, la fonction sécurisée s'exécute correctement.

### Avantages de la sécurisation contre les attaques par dépassement de tampon :

Le fait de chiffrer l'adresse @ra2 de la fonction appelante F2 avec une valeur ivₐ différente de la valeur iv_{b} utilisée lors de la sauvegarde des données DF₃ de la fonction F₃ appelée permet de rendre plus difficile les attaques par dépassement de tampon.

Le fait de chiffrer les données enregistrées dans la pile 46 renforce la sécurité du procédé.

Le fait de chiffrer les données sauvegardées dans la pile en fonction d'une valeur qui dépend en plus de l'adresse où la donnée est sauvegardée dans la pile permet d'autoriser un accès aléatoire aux données chiffrées et sauvegardées dans la pile 46, tout en rendant difficile la permutation de deux lignes de données enregistrées dans cette pile d'exécution.

L'utilisation d'un code détecteur d'erreur associé à chaque donnée sauvegardée dans la pile d'exécution permet de détecter si le déchiffrement d'une donnée s'est correctement déroulé avant que cette donnée ne soit exploitée et traitée lors de l'exécution du code machine 30.

Le déchiffrement et le chiffrement de l'adresse @ra2 en plus à l'aide de la clé ka seulement connue et stockée dans le module 28 permet de rendre encore plus difficile la mise en œuvre d'une attaque par dépassement de tampon.

Utiliser un code correcteur d'erreur en tant que code ECC_{Dj} permet, en plus, de corriger une erreur détectée. Cela permet donc de poursuivre l'exécution de la fonction sécurisée même si une erreur a été signalée.

## Revendications

1. Procédé d'exécution d'un code binaire d'une fonction sécurisée par un microprocesseur, ce procédé comportant les étapes suivantes :
a) la fourniture (150) du code binaire, le code binaire fourni comportant un code machine contenant une succession de blocs de base dans lequel :
- chaque bloc de base comporte une succession de lignes d'instructions chiffrées contenant chacune le cryptogramme d'une instruction, les instructions chiffrées dans ces lignes d'instructions successives étant destinées à être exécutées par le microprocesseur systématiquement dans l'ordre de ces lignes d'instructions,
- chaque bloc de base débute à une adresse de branchement et se termine par une ligne d'instruction contenant le cryptogramme d'une instruction de branchement vers une adresse de branchement d'un autre bloc de base, cet autre bloc de base étant appelé « le bloc de base suivant» et le bloc de base qui se termine par la ligne d'instruction contenant le cryptogramme de cette instruction de branchement vers ce bloc de base suivant étant appelé « le bloc de base précédent »,
- le cryptogramme contenu dans chaque ligne d'instruction chiffrée d'un bloc de base ayant été obtenu à l'aide d'un même vecteur d'initialisation différent des vecteurs d'initialisation utilisés pour obtenir les cryptogrammes de lignes d'instructions chiffrées des autres blocs de base,
- chaque bloc de base précédent contient une ligne d'instruction contenant le cryptogramme d'une instruction de chargement qui, lorsqu'elle est exécutée par le microprocesseur, provoque le chargement, dans le microprocesseur, du vecteur d'initialisation à utiliser pour déchiffrer le cryptogramme de chaque ligne d'instruction chiffrée du bloc de base suivant,
b) l'exécution (152) du code binaire par le microprocesseur, lors de cette exécution le procédé comporte les opérations suivantes :
- l'exécution d'un bloc de base précédent, cette exécution du bloc de base précédent comportant le déchiffrement (178) et l'exécution (190) de l'instruction de chargement contenu dans ce bloc de base précédent, puis le déchiffrement et l'exécution de l'instruction de branchement, puis
- l'exécution du bloc de base suivant, cette exécution du bloc de base suivant comportant le déchiffrement (178) du cryptogramme de chaque ligne d'instruction chiffrée du bloc de base suivant à l'aide du vecteur d'initialisation chargé dans le microprocesseur lors de l'exécution du bloc de base précédent,
**caractérisé en ce que** :
- lors de l'étape a), le code machine fourni comporte au moins un premier bloc (70, 82; 222) de base précédent dans lequel :
- l'instruction de branchement est une instruction de branchement indirect, c'est-à-dire une instruction de branchement contenant un opérande qui identifie un registre de destination et qui, lorsqu'elle est exécutée par le microprocesseur, provoque un branchement directement vers la première ligne d'instruction chiffrée d'un bloc de base suivant dont l'adresse est obtenue à partir du contenu de ce registre de destination,
- l'instruction de chargement est une instruction de chargement indirect, c'est-à-dire une instruction de chargement contenant un opérande qui identifie le même registre de destination que celui identifié par l'opérande de l'instruction de branchement indirect et qui, lorsqu'elle est exécutée par le microprocesseur, provoque :
- la lecture d'une ligne de donnée associée à l'adresse obtenue à partir du contenu du registre de destination, puis
- la construction d'un vecteur d'initialisation à partir du contenu de cette ligne de donnée, puis
- le chargement de ce vecteur d'initialisation construit dans le microprocesseur,
- l'étape b) comporte en plus :
• l'exécution (190) de l'instruction de chargement indirect du premier bloc de base précédent, puis
• l'exécution (190) de l'instruction de branchement indirect du premier bloc de base précédent.

2. Procédé selon la revendication 1, dans lequel, lors de l'étape a), dans le code machine fourni, ladite ligne de donnée est la première ligne de chaque bloc (72, 80; 212) de base suivant le premier bloc de base précédent, cette ligne de donnée, contrairement à une ligne d'instruction, ne codant aucun opcode d'une instruction exécutable par le microprocesseur.

3. Procédé selon l'une quelconque des revendications précédentes, dans lequel, lors de l'étape b), la construction du vecteur d'initialisation à partir du contenu de la ligne de donnée, comporte le déchiffrement d'un cryptogramme iv_{lsbi}* contenu dans cette ligne de donnée pour obtenir une première valeur, puis l'utilisation de cette première valeur pour construire le vecteur d'initialisation.

4. Procédé selon la revendication 3, dans lequel, lors de l'étape b), la construction du vecteur d'initialisation à partir du contenu de la ligne de donnée comporte :
- la construction d'une seconde valeur à partir de l'adresse @ⱼ de la ligne de donnée, puis,
- le déchiffrement du cryptogramme iv_{lsbi}* à l'aide de cette seconde valeur construite à partir de l'adresse @ⱼ.

5. Procédé selon l'une quelconque des revendications 3 à 4, dans lequel :
- lors de l'étape a), la ligne de donnée est fournie et comporte en plus un code détecteur d'erreur (ECCₗⱼ) permettant de détecter une erreur dans la première valeur obtenue après déchiffrement du cryptogramme iv_{lsbi}*, puis
- lors de l'étape b), la construction du vecteur d'initialisation à partir du contenu de la ligne de donnée, comporte en plus les opérations suivantes :
- la vérification, à l'aide du code détecteur d'erreur contenu dans cette ligne de donnée, s'il existe une erreur dans la première valeur obtenue après déchiffrement du cryptogramme iv_{lsbi}*, et
- lorsqu'une telle erreur existe, le déclenchement (172) d'un signalement d'une faute d'exécution et, en alternance, lorsqu'une telle erreur n'existe pas, l'inhibition de ce signalement d'une faute d'exécution.

6. Procédé selon l'une quelconque des revendications précédentes, dans lequel :
- lors de l'étape a), chaque ligne d'instruction chiffrée fournie contient :
- un cryptogramme (CIⱼ*) d'une concaténation :
- de ladite instruction, et
- d'un premier code détecteur d'erreur (ECC_{Ij}) permettant de détecter une erreur dans l'instruction avec laquelle il est concaténé, et
- lors de l'étape b), à chaque fois que le microprocesseur charge une ligne d'instruction, le procédé comporte les opérations suivantes :
- le déchiffrement (178) du cryptogramme pour obtenir une instruction déchiffrée et le premier code détecteur d'erreur déchiffré, puis
- la vérification (184), à l'aide du premier code détecteur d'erreur déchiffré, s'il existe une erreur dans cette instruction déchiffrée, et, dans le cas où une telle erreur est détectée dans cette instruction déchiffrée, le déclenchement (172) du signalement d'un faute d'exécution, et, dans le cas où aucune erreur n'a été détectée dans cette instruction déchiffrée, le microprocesseur décode l'instruction déchiffrée et la transmet à l'unité arithmétique et logique qui l'exécute (190).

7. Procédé selon la revendication 6, dans lequel :
- lors de l'étape a), chaque ligne d'instruction contient en plus un code d'authentification de message permettant de vérifier l'intégrité et l'authenticité du cryptogramme contenu dans la même ligne, et
- lors de l'étape b), à chaque fois que le microprocesseur charge une ligne d'instruction, le procédé comporte les opérations suivantes :
- la construction d'une étiquette à partir du cryptogramme contenu dans la ligne de code chargée, puis
- le chiffrement de l'étiquette construite à l'aide d'une clé secrète enregistrée dans une mémoire non volatile d'un module matériel de sécurisation, puis
- la comparaison de l'étiquette chiffrée au code d'authentification de message contenu dans la ligne d'instruction chargée, puis
- lorsque l'étiquette chiffrée n'est pas identique au code d'authentification de message contenu dans la ligne d'instruction chargée, le déclenchement (172) du signalement d'un faute d'exécution, et, dans le cas contraire, le microprocesseur décode l'instruction déchiffrée et la transmet à l'unité arithmétique et logique qui l'exécute (190).

8. Procédé selon l'une quelconque des revendications précédentes, dans lequel le contenu du registre de destination est inconnu au moment où le code binaire est généré par un compilateur.

9. Code binaire d'une fonction sécurisée exécutable par un microprocesseur pour la mise en œuvre d'un procédé d'exécution conforme à l'une quelconque des revendications précédentes, dans lequel le code binaire comprend un code machine contenant une succession de blocs de base et dans lequel :
- chaque bloc de base comporte une succession de lignes (LIⱼ) d'instructions chiffrées contenant chacune le cryptogramme (CIⱼ*) d'une instruction (Iⱼ), les instructions chiffrées dans ces lignes d'instructions successives étant destinées à être exécutées par le microprocesseur systématiquement dans l'ordre de ces lignes d'instructions,
- chaque bloc de base débute à une adresse (@ₖ) de branchement et se termine par une ligne d'instruction contenant le cryptogramme d'une instruction de branchement vers une adresse de branchement d'un autre bloc de base, cet autre bloc de base étant appelé « le bloc de base suivant » et le bloc de base qui se termine par la ligne d'instruction contenant le cryptogramme de cette instruction de branchement vers ce bloc de base suivant étant appelé « le bloc de base précédent »,
- le cryptogramme contenu dans chaque ligne d'instruction chiffrée d'un bloc de base ayant été obtenu à l'aide d'un même vecteur d'initialisation (ivₖ) différent des vecteurs d'initialisation utilisés pour obtenir les cryptogrammes de lignes d'instructions chiffrées des autres blocs de base,
- chaque bloc de base précédent contient une ligne d'instruction contenant le cryptogramme d'une instruction de chargement qui, lorsqu'elle est exécutée par le microprocesseur, provoque le chargement, dans le microprocesseur, du vecteur d'initialisation (ivₖ) à utiliser pour déchiffrer le cryptogramme de chaque ligne d'instruction chiffrée du bloc de base suivant,
**caractérisé en ce que** le code machine comporte au moins un premier bloc (70, 72, 222) de base précédent dans lequel :
- l'instruction de branchement est une instruction de branchement indirect, c'est-à-dire une instruction de branchement contenant un opérande qui identifie un registre de destination et qui, lorsqu'elle est exécutée par le microprocesseur, provoque un branchement directement vers la première ligne d'instruction chiffrée d'un bloc de base suivant dont l'adresse est obtenue à partir du contenu de ce registre de destination,
- l'instruction de chargement est une instruction de chargement indirect, c'est-à-dire une instruction de chargement contenant un opérande qui identifie le même registre de destination que celui identifié par l'opérande de l'instruction de branchement indirect et qui, lorsqu'elle est exécutée par le microprocesseur, provoque :
- la lecture d'une ligne de donnée associée à l'adresse obtenue à partir du contenu du registre de destination, puis
- la construction d'un vecteur d'initialisation à partir du contenu de cette ligne de donnée, puis
- le chargement de ce vecteur d'initialisation construit dans le microprocesseur.

10. Support d'enregistrement d'informations lisibles par un microprocesseur, **caractérisé en ce qu'**il comporte un code binaire (30) conforme à la revendication 9.

11. Microprocesseur (2) pour la mise en œuvre d'un procédé conforme à l'une quelconque des revendications 1 à 8, ce microprocesseur comportant une unité arithmétique et logique (10) et un module matériel de sécurisation (28), **caractérisé en ce que** le module matériel de sécurisation (28) est configuré pour construire le vecteur d'initialisation à partir du contenu de la ligne de donnée associée à l'adresse obtenue à partir du contenu du registre de destination.

12. Compilateur (300) apte à transformer automatiquement un code source d'une fonction sécurisée en un code binaire de cette fonction sécurisée, **caractérisé en ce que** le compilateur est apte à transformer automatiquement le code source en un code binaire conforme à revendication 9.

## Patentansprüche

1. Verfahren zur Ausführung eines Binärcodes einer mikroprozessorgesicherten Funktion, wobei dieses Verfahren die folgenden Schritte umfasst:
a) Bereitstellung (150) des Binärcodes, wobei der bereitgestellte Binärcode einen Maschinencode umfasst, der eine Abfolge von Basisblöcken enthält, wobei:
- jeder Basisblock eine Abfolge von Zeilen verschlüsselter Anweisungen umfasst, die jeweils das Kryptogramm einer Anweisung enthalten, wobei die verschlüsselten Anweisungen in diesen aufeinanderfolgenden Anweisungszeilen dazu bestimmt sind, durch den Mikroprozessor systematisch in der Reihenfolge dieser Anweisungszeilen ausgeführt zu werden,
- jeder Basisblock bei einer Verzweigungsadresse beginnt und mit einer Anweisungszeile endet, die das Kryptogramm einer Anweisung zur Verzweigung zu einer Verzweigungsadresse eines anderen Basisblocks enthält, wobei dieser andere Basisblock "nachfolgender Basisblock" genannt wird und der Basisblock, der mit der Anweisungszeile endet, die das Kryptogramm dieser Anweisung zur Verzweigung zum folgenden Basisblock enthält, "vorhergehender Basisblock" genannt wird,
- das Kryptogramm, das in jeder verschlüsselten Anweisungszeile eines Basisblocks enthalten ist, mithilfe eines gemeinsamen Initialisierungsvektors erhalten wurde, der sich von den Initialisierungsvektoren unterscheidet, die dazu genutzt werden, die Kryptogramme der verschlüsselten Anweisungszeilen der anderen Basisblöcke zu erhalten,
- jeder vorhergehende Basisblock eine Anweisungszeile enthält, die das Kryptogramm einer Ladeanweisung enthält, die bei Ausführung durch den Mikroprozessor das Laden des Initialisierungsvektors, der zur Entschlüsselung des Kryptogramms jeder verschlüsselten Anweisungszeile des nachfolgenden Basisblocks zu verwenden ist, in den Mikroprozessor veranlasst,
b) Ausführung (152) des Binärcodes durch den Mikroprozessor, wobei bei dieser Ausführung das Verfahren die folgenden Operationen umfasst:
- Ausführung eines vorhergehenden Basisblocks, wobei diese Ausführung des vorhergehenden Basisblocks die Entschlüsselung (178) und die Ausführung (190) der Ladeanweisung, die in diesem vorhergehenden Basisblock enthalten ist, anschließend die Entschlüsselung und Ausführung der Verzweigungsanweisung umfasst, anschließend
- Ausführung des nachfolgenden Basisblocks, wobei diese Ausführung des nachfolgenden Basisblock die Entschlüsselung (178) des Kryptogramms jeder verschlüsselten Anweisungszeile des nachfolgenden Basisblocks mithilfe des Initialisierungsvektors umfasst, der bei Ausführung des vorhergehenden Basisblocks in den Mikroprozessor geladen wurde,
**dadurch gekennzeichnet, dass**
- in Schritt a) der bereitgestellte Maschinencode mindestens einen ersten vorhergehenden Basisblock (70, 82; 222) umfasst, wobei:
- die Verzweigungsanweisung eine indirekte Verzweigungsanweisung ist, d. h. eine Verzweigungsanweisung, die einen Operanden enthält, der ein Zielregister benennt und der bei Ausführung durch den Mikroprozessor eine Verzweigung direkt zur ersten verschlüsselten Anweisungszeile eines nachfolgenden Basisblocks veranlasst, dessen Adresse anhand des Inhalts dieses Zielregisters erhalten wird,
- die Ladeanweisung eine indirekte Ladeanweisung ist, d. h. eine Ladeanweisung, die einen Operanden enthält, der dasselbe Zielregister wie das durch den Operanden der indirekten Verzweigungsanweisung benannte benennt und die bei Ausführung durch den Mikroprozessor veranlasst:
- Lesen einer Datenzeile, die mit der Adresse verknüpft ist, die anhand des Inhalts des Zielregisters erhalten wurde, anschließend
- Konstruktion eines Initialisierungsvektors anhand des Inhalt dieser Datenzeile, dann
- Laden dieses konstruierten Initialisierungsvektors in den Mikroprozessor,
- Schritt b) außerdem umfasst:
• Ausführung (190) der indirekten Ladeanweisung des ersten vorhergehenden Basisblocks, anschließend
• Ausführung (190) der indirekten Verzweigungsanweisung des ersten vorhergehenden Basisblocks.

2. Verfahren nach Anspruch 1, wobei in Schritt a) im bereitgestellten Maschinencode die Datenzeile die erste Zeile jedes Basisblocks (72, 80: 212) ist, der dem ersten vorhergehenden Basisblock nachfolgt, wobei diese Datenzeile im Gegensatz zu einer Anweisungszeile keinen Opcode einer durch den Mikroprozessor ausführbaren Anweisung codiert.

3. Verfahren nach einem der vorhergehenden Ansprüche, wobei in Schritt b) die Konstruktion des Initialisierungsvektors anhand des Inhalts der Datenzeile die Entschlüsselung eines in dieser Datenzeile enthaltenen Kryptogramms iv_{lsbi}* umfasst, um einen ersten Wert zu erhalten, anschließend die Verwendung dieses ersten Werts, um den Initialisierungsvektor zu konstruieren.

4. Verfahren nach Anspruch 3, wobei in Schritt b) die Konstruktion des Initialisierungsvektors anhand des Inhalts der Datenzeile umfasst:
- Konstruktion eines zweiten Werts anhand der Adresse @ⱼ der Datenzeile, anschließend
- Entschlüsselung des Kryptogramms iv_{lsbi}* mithilfe dieses zweiten Werts, der anhand der Adresse @ⱼ konstruiert wurde.

5. Verfahren nach einem der Ansprüche 3 bis 4, wobei:
- in Schritt a) die Datenzeile bereitgestellt wird und außerdem einen Fehlererkennungscode (ECC_{Ij}) umfasst, der die Erkennung eines Fehlers im ersten Wert ermöglicht, der nach Entschlüsselung des Kryptogramms iv_{lsbi}* erhalten wurde, anschließend
- in Schritt b) die Konstruktion des Initialisierungsvektors anhand des Inhalts der Datenzeile außerdem die folgenden Operationen umfasst:
- Überprüfung mithilfe des in dieser Datenzeile enthaltenen Fehlererkennungscodes, ob ein Fehler im ersten Wert vorliegt, der nach Entschlüsselung des Kryptogramms iv_{lsbi}* erhalten wurde, und
- wenn ein solcher Fehler vorliegt, Auslösung (172) einer Signalisierung eines Ausführungsfehlers und alternativ, wenn ein solcher Fehler nicht vorliegt, Hemmung dieser Signalisierung eines Ausführungsfehlers.

6. Verfahren nach einem der vorhergehenden Ansprüche, wobei:
- in Schritt a) jede bereitgestellte verschlüsselte Anweisungszeile enthält:
- ein Kryptogramm (CIⱼ*) einer Verkettung:
- der Anweisung und
- eines ersten Fehlererkennungscodes (ECC_{Ij}), der die Erkennung eines Fehlers in der Anweisung ermöglicht, mit der er verkettet ist, und
- in Schritt b) jedes Mal, wenn der Mikroprozessor eine Anweisungszeile lädt, das Verfahren die folgenden Schritte umfasst:
- Entschlüsselung (178) des Kryptogramms, um eine entschlüsselte Anweisung und den entschlüsselten ersten Fehlererkennungscode zu erhalten, anschließend
- Überprüfung (184) mithilfe des entschlüsselten ersten Fehlererkennungscodes, ob in dieser entschlüsselten Anweisung ein Fehler vorliegt, und im Fall, dass in dieser entschlüsselten Anweisung ein solcher Fehler erkannt wird, Auslösung (172) der Signalisierung eines Ausführungsfehlers und im Fall, dass in dieser entschlüsselten Anweisung kein Fehler erkannt wurde, decodiert der Mikroprozessor die entschlüsselte Anweisung und überträgt sie an die Arithmetik- und Logikeinheit, die sie ausführt (190).

7. Verfahren nach Anspruch 6, wobei:
- in Schritt a) jede Anweisungszeile außerdem einen Meldungsauthentifizierungscode enthält, der die Überprüfung der Integrität und der Authentizität des in derselben Zeile enthaltenen Kryptogramms ermöglicht, und
- in Schritt b) jedes Mal, wenn der Mikroprozessor eine Anweisungszeile lädt, das Verfahren die folgenden Operationen umfasst:
- Konstruktion einer Kennzeichnung anhand des Kryptogramms, das in der geladenen Codezeile enthalten ist, anschließend
- Verschlüsselung der Kennzeichnung, die mithilfe eines geheimen Schlüssels konstruiert wird, der in einem nichtflüchtigen Speicher eines Sicherungs-Hardwaremoduls gespeichert ist, anschließend
- Vergleich der verschlüsselten Kennzeichnung mit dem Meldungsauthentifizierungscode, der in der geladenen Anweisungszeile enthalten ist, anschließend
- wenn die verschlüsselte Kennzeichnung mit dem Meldungsauthentifizierungscode, der in der geladenen Anweisungszeile enthalten ist, nicht identisch ist, Auslösung (172) der Signalisierung eines Ausführungsfehlers und im gegenteiligen Fall decodiert der Mikroprozessor die entschlüsselte Anweisung und überträgt sie an die Arithmetik- und Logikeinheit, die sie ausführt (190).

8. Verfahren nach einem der vorhergehenden Ansprüche, wobei der Inhalt des Zielregisters in dem Moment, in dem der Binärcode durch einen Compiler generiert wird, unbekannt ist.

9. Binärcode einer durch einen Mikroprozessor ausführbaren gesicherten Funktion zur Umsetzung eines Ausführungsverfahrens nach einem der vorhergehenden Ansprüche, wobei der Binärcode einen Maschinencode umfasst, der eine Abfolge von Basisblöcken enthält, und wobei:
- jeder Basisblock eine Abfolge von Zeilen (LIⱼ) verschlüsselter Anweisungen umfasst, die jeweils das Kryptogramm (CIⱼ*) einer Anweisung (Iⱼ) enthalten, wobei die verschlüsselten Anweisungen in diesen aufeinanderfolgenden Anweisungszeilen dazu bestimmt sind, durch den Mikroprozessor systematisch in der Reihenfolge dieser Anweisungszeilen ausgeführt zu werden,
- jeder Basisblock bei einer Verzweigungsadresse (@ₖ) beginnt und mit einer Anweisungszeile endet, die das Kryptogramm einer Anweisung zur Verzweigung zu einer Verzweigungsadresse eines anderen Basisblocks enthält, wobei dieser andere Basisblock "nachfolgender Basisblock" genannt wird und der Basisblock, der mit der Anweisungszeile endet, die das Kryptogramm dieser Anweisung zur Verzweigung zum nachfolgenden Basisblock enthält, "vorhergehender Basisblock" genannt wird,
- das Kryptogramm, das in jeder verschlüsselten Anweisungszeile eines Basisblocks enthalten ist, mithilfe eines gemeinsamen Initialisierungsvektors (ivₖ) erhalten wurde, der sich von den Initialisierungsvektoren unterscheidet, die dazu genutzt werden, die Kryptogramme der verschlüsselten Anweisungszeilen der anderen Basisblöcke zu erhalten,
- jeder vorhergehende Basisblock eine Anweisungszeile enthält, die das Kryptogramm einer Ladeanweisung enthält, die bei Ausführung durch den Mikroprozessor das Laden des Initialisierungsvektors (ivₖ), der zur Entschlüsselung des Kryptogramms jeder verschlüsselten Anweisungszeile des nachfolgenden Basisblocks zu verwenden ist, in den Mikroprozessor veranlasst,
**dadurch gekennzeichnet, dass** der Maschinencode mindestens einen ersten vorhergehenden Basisblock (70, 72, 222) umfasst, wobei:
- die Verzweigungsanweisung eine indirekte Verzweigungsanweisung ist, d. h. eine Verzweigungsanweisung, die einen Operanden enthält, der ein Zielregister benennt und der bei Ausführung durch den Mikroprozessor eine Verzweigung direkt zur ersten verschlüsselten Anweisungszeile eines nachfolgenden Basisblocks veranlasst, dessen Adresse anhand des Inhalts dieses Zielregisters erhalten wird,
- die Ladeanweisung eine indirekte Ladeanweisung ist, d. h. eine Ladeanweisung, die einen Operanden enthält, der dasselbe Zielregister wie das durch den Operanden der indirekten Verzweigungsanweisung benannte benennt und die bei Ausführung durch den Mikroprozessor veranlasst:
- Lesen einer Datenzeile, die mit der Adresse verknüpft ist, die anhand des Inhalts des Zielregisters erhalten wurde, anschließend
- Konstruktion eines Initialisierungsvektors anhand des Inhalts dieser Datenzeile, anschließend
- Laden dieses konstruierten Initialisierungsvektors in den Mikroprozessor.

10. Speichermedium für Informationen, die durch einen Mikroprozessor lesbar sind, **dadurch gekennzeichnet, dass** es einen Binärcode (30) nach Anspruch 9 umfasst.

11. Mikroprozessor (2) für die Umsetzung eines Verfahrens nach einem der Ansprüche 1 bis 8, wobei dieser Mikroprozessor eine Arithmetik- und Logikeinheit (10) und ein Sicherungs-Hardwaremodul (28) umfasst, **dadurch gekennzeichnet, dass** das Sicherungs-Hardwaremodul (28) dazu konfiguriert ist, den Initialisierungsvektor anhand des Inhalts der Datenzeile zu konstruieren, die mit der Adresse verknüpft ist, die anhand des Inhalts des Zielregisters erhalten wurde.

12. Compiler (300), der dazu geeignet ist, einen Quellcode einer gesicherten Funktion automatisch in einen Binärcode dieser gesicherten Funktion umzuwandeln, **dadurch gekennzeichnet, dass** der Compiler dazu geeignet ist, den Quellcode automatisch in einen Binärcode nach Anspruch 9 umzuwandeln.

## Claims

1. Method for executing a binary code for a function secured by a microprocessor, this method comprising the following steps:
a) the supplying (150) of the binary code, the binary code supplied comprising a machine code containing a succession of basic blocks in which:
- each basic block comprises a succession of encrypted instruction lines each containing the cryptogram of an instruction, the encrypted instructions in these successive instruction lines being intended to be executed by the microprocessor systematically in the order of these instruction lines,
- each basic block begins at a branch address and ends with an instruction line containing the cryptogram of a branch instruction to a branch address of another basic block, this other basic block being called "the next basic block" and the basic block which ends with the instruction line containing the cryptogram of this branch instruction to this next basic block being called "the preceding basic block",
- the cryptogram contained in each encrypted instruction line of a basic block has been obtained using a same initialization vector that is different from the initialization vectors used to obtain the cryptograms of encrypted instruction lines of the other basic blocks,
- each preceding basic block contains an instruction line containing the cryptogram of a load instruction which, when it is executed by the microprocessor, provokes the loading, in the microprocessor, of the initialization vector to be used to decrypt the cryptogram of each encrypted instruction line of the next basic block,
b) the execution (152) of the binary code by the microprocessor, upon this execution the method comprising the following operations:
- the execution of a preceding basic block, this execution of the preceding basic block comprising the encryption (178) and the execution (190) of the load instruction contained in this preceding basic block, then the decryption and the execution of the branch instruction, then
- the execution of the next basic block, this execution of the next basic block comprising the decryption (178) of the cryptogram of each encrypted instruction line of the next basic block using the initialization vector loaded in the microprocessor upon the execution of the preceding basic block,
**characterized in that**:
- in the step a), the machine code supplied comprises at least one first preceding basic block (70, 82; 222) in which:
- the branch instruction is an indirect branch instruction, that is to say a branch instruction containing an operand which identifies a destination register and which, when it is executed by the microprocessor, provokes a branch directly to the first encrypted instruction line of a next basic block whose address is obtained from the content of this destination register,
- the load instruction is an indirect load instruction, that is to say a load instruction containing an operand which identifies the same destination register as that identified by the operand of the indirect branch instruction and which, when it is executed by the microprocessor, provokes:
- the reading of a data line associated with the address obtained from the content of the destination register, then
- the construction of an initialization vector from the content of this data line, then
- the loading of this constructed initialization vector in the microprocessor,
- the step b) additionally comprises:
• the execution (190) of the indirect load instruction of the first preceding basic block, then
• the execution (190) of the indirect branch instruction of the first preceding basic block.

2. Method according to Claim 1, wherein, in the step a), in the machine code supplied, said data line is the first line of each basic block (72, 80; 212) following the first preceding basic block, this data line, unlike an instruction line, coding no opcode of an instruction executable by the microprocessor.

3. Method according to either one of the preceding claims, wherein, in the step b), the construction of the initialization vector from the content of the data line comprises the decryption of a cryptogram iv_{lsbi}* contained in this data line to obtain a first value, then the use of this first value to construct the initialization vector.

4. Method according to Claim 3, wherein, in step b), the construction of the initialization vector from the content of the data line comprises:
- the construction of a second value from the address @ⱼ of the data line, then
- the decryption of the cryptogram iv_{lsbi}* using this second value constructed from the address @ⱼ.

5. Method according to either one of Claims 3 and 4, wherein:
- in the step a), the data line is supplied and additionally comprises an error detecting code(ECC_{Ij}) allowing an error to be detected in the first value obtained after decryption of the cryptogram iv_{lsbi}*, then
- in the step b), the construction of the initialization vector from the content of the data line additionally comprises the following operations:
- the checking, using the error detecting code contained in this data line, to see if there is an error in the first value obtained after decryption of the cryptogram iv_{lsbi}*, and
- when such an error exists, the triggering (172) of a signalling of an execution fault and, alternatively, when such an error does not exist, the inhibition of this signalling of an execution fault.

6. Method according to any one of the preceding claims, wherein:
- in the step a), each encrypted instruction line supplied contains:
- a cryptogram (CIⱼ*) of a concatenation:
- of said instruction, and
- of a first error detecting code (ECC_{Ij}) allowing an error to be detected in the instruction with which it is concatenated, and
- in the step b), each time the microprocessor loads an instruction line, the method comprises the following operations:
- the decryption (178) of the cryptogram to obtain a decrypted instruction and the first decrypted error detecting code, then
- the checking (184), using the first decrypted error detecting code, to see if there is an error in this decrypted instruction, and, in the case where such an error is detected in this decrypted instruction, the triggering (172) of the signalling of an execution fault, and, in the case where no error has been detected in this decrypted instruction, the microprocessor decodes the decrypted instruction and transmits it to the arithmetic and logic unit which executes it (190).

7. Method according to Claim 6, wherein:
- in the step a), each instruction line additionally contains a message authentication code allowing the integrity and the authenticity of the cryptogram contained in the same line to be checked, and
- in the step b), each time the microprocessor loads an instruction line, the method comprises the following operations:
- the construction of a label from the cryptogram contained in the line of code loaded, then
- the encryption of the constructed label using a secret key stored in a non-volatile memory of a security hardware module, then
- the comparison of the encrypted label to the message authentication code contained in the loaded instruction line, then
- when the encrypted label is not identical to the message authentication code contained in the loaded instruction line, the triggering (172) of the signalling of an execution fault, and, otherwise, the microprocessor decodes the decrypted instruction and transmits it to the arithmetic and logic unit which executes it (190).

8. Method according to any one of the preceding claims, wherein the content of the destination register is unknown at the moment when the binary code is generated by a compiler.

9. Binary code of a secure function executable by a microprocessor for the implementation of an execution method according to any one of the preceding claims, wherein the binary code comprises a machine code containing a succession of basic blocks and wherein:
- each basic block comprises a succession of encrypted instruction lines (LIⱼ) each containing the cryptogram (CIⱼ*) of an instruction (Iⱼ), the encrypted instructions in these successive instruction lines being intended to be executed by the microprocessor systematically in the order of these instruction lines,
- each basic block begins at a branch address (@ₖ) and ends with an instruction line containing the cryptogram of a branch instruction to a branch address of another basic block, this other basic block being called "the next basic block" and the basic block which ends with the instruction line containing the cryptogram of this branch instruction to this next basic block being called "the preceding basic block",
- the cryptogram contained in each encrypted instruction line of a basic block has been obtained using a same initialization vector (ivₖ) that is different from the initialization vectors used to obtain the cryptograms of encrypted instruction lines of the other basic blocks,
- each preceding basic block contains an instruction line containing the cryptogram of a load instruction which, when it is executed by the microprocessor, provokes the loading, in the microprocessor, of the initialization vector (ivₖ) to be used to decrypt the cryptogram of each encrypted instruction line of the next basic block,
**characterized in that** the machine code comprises at least one first preceding basic block (70, 72, 222) in which:
- the branch instruction is an indirect branch instruction, that is to say a branch instruction containing an operand which identifies a destination register and which, when it is executed by the microprocessor, provokes a branch directly to the first encrypted instruction line of a next basic block whose address is obtained from the content of this destination register,
- the load instruction is an indirect load instruction, that is to say a load instruction containing an operand which identifies the same destination register as that identified by the operand of the indirect branch instruction and which, when it is executed by the microprocessor, provokes:
- the reading of a data line associated with the address obtained from the content of the destination register, then
- the construction of an initialization vector from the content of this data line, then
- the loading of this constructed initialization vector in the microprocessor.

10. Microprocessor-readable information storage medium, **characterized in that** it comprises a binary code (30) according to Claim 9.

11. Microprocessor (2) for implementing a method according to any one of Claims 1 to 8, this microprocessor comprising an arithmetic and logic unit (10) and a security hardware module (28), **characterized in that** the security hardware module (28) is configured to construct the initialization vector from the content of the data line associated with the address obtained from the content of the destination register.

12. Compiler (300) capable of automatically converting a source code of a secure function into a binary code of this secure function, **characterized in that** the compiler is capable of automatically converting the source code into a binary code according to Claim 9.
